Europäisches Patentamt

European Patent Office

Office européen des brevets

(19)

(11) Numéro de publication: **0 097 598**
**B1**

(12) **FASCICULE DE BREVET EUROPEEN**

(45) Date de publication du fascicule du brevet:
**29.10.86**

(21) Numéro de dépôt: **83401292.4**

(22) Date de dépôt: **22.06.83**

(51) Int. Cl.⁴: **G 03 B 17/50, G 03 B 27/32**

(54) **Procédé et installation de saisie de données et de reproduction par transfert en continu.**

(30) Priorité: **22.06.82 FR 8210917**
**09.09.82 FR 8215310**

(43) Date de publication de la demande:
**04.01.84 Bulletin 84/1**

(45) Mention de la délivrance du brevet:
**29.10.86 Bulletin 86/44**

(84) Etats contractants désignés:
**AT BE CH DE GB IT LI LU NL SE**

(56) Documents cités:
**EP - A - 0 045 003**
**CH - A - 376 652**
**DE - A - 3 038 202**
**DE - C - 847 846**
**FR - A - 1 574 246**
**GB - A - 1 243 704**
**US - A - 2 582 001**
**US - A - 3 106 506**
**US - A - 3 158 523**
**US - A - 3 252 396**
**US - A - 3 391 046**
**US - A - 3 620 880**
**US - A - 3 901 639**
**US - A - 4 181 554**
**US - A - 4 226 664**

(73) Titulaire: **Tisserand, Jacques, 21 route de Montfermeil,**
**F-77500 Chelles (FR)**
Titulaire: **Carganico, Serge, 9 bis rue du Lieutenant**
**Chauré, F-94100 Saint-Maur (FR)**

(72) Inventeur: **Tisserand, Jacques, 21 route de Montfermeil,**
**F-77500 Chelles (FR)**
Inventeur: **Carganico, Serge, 9 bis rue du Lieutenant**
**Chauré, F-94100 Saint-Maur (FR)**

(74) Mandataire: **Thevenet, Jean-Bruno, Cabinet BEAU DE**
**LOMENIE 55 rue d'Amsterdam, F-75008 Paris (FR)**

## Description

La présente invention a pour objet une installation de saisie de données et de reproduction par transfert pour reporter en continu sur un support par le procédé photographique de transfert par diffusion à partir d'une image négative intermédiaire, des informations stockées de façon discontinue sur un support de base, comprenant un dispositif pour impressionner un film négatif en fonction des informations stockées sur le support de base, un dispositif pour superposer au film négatif impressionné une bande réceptrice, et des moyens pour mettre, avant leur superposition, le film négatif impressionné et la bande réceptrice en contact avec un bain unique de traitement assurant le développement du film négatif puis, lors de la superposition du film négatif et de la bande réceptrice, le transfert, par diffusion d'une image positive, sur la bande réceptrice, de l'image développée sur le film négatif. Une telle installation est connue du document DE-A-3 038 202 et du US-A-3 252 396.

On a déjà tenté de réaliser en continu le transfert des sels d'argent d'une image négative intermédiaire sur une bande réceptrice non photosensible mise en contact avec le film négatif immédiatement après le développement de ce dernier. Contrairement au cas du traitement discontinu pour lequel on agit sur une seule image ou un très petit nombre d'images à la fois, un traitement en continu se heurte à des obstacles majeurs du fait de la difficulté d'entraîner en synchronisation deux bandes de grande longueur de matériaux aux caractéristiques mécaniques très différentes.

On a déjà essayé de contraindre les matériaux à défiler en coïncidence à l'aide de perforations régulièrement espacées selon un pas déterminé, le long de chacune des bandes. Toutefois, les réactions mécaniques des deux matériaux ont fait apparaître des contraintes prohibitives sur ces deux matériaux introduisant une erreur systématique qui se cumule et s'amplifie au fur et à mesure du déroulement du processus de développement transfert.

La présente invention vise précisément à remédier aux inconvénients précités et à permettre un développement et un transfert des images d'un film négatif de grande longueur en continu sans risque de décalage important, de freinage ou d'à coups dans le cheminement des bandes, et à autoriser l'utilisation de bandes éventuellement non perforées.

Ces buts sont atteints du fait que dans l'installation selon l'invention le dispositif de superposition-transfert du film négatif impressionné et de la bande réceptrice comprend une première paire de rouleaux de traction disposés à l'entrée de la zone de superposition du film négatif impressionné et de la bande réceptrice pour pincer et entraîner simultanément le film et la bande superposés et une deuxième paire de rouleaux de traction disposés à la sortie de ladite zone de superposition, pour pincer et entraîner la seule bande réceptrice, le film étant entraîné par adhérence sur la bande réceptrice et se séparant librement à la sortie de ladite zone de superposition, et des premiers moyens de repérage de l'avancement de la bande réceptrice sont prévus pour commander par intermittence, à des instants déterminés par la détection de repères formés sur la bande réceptrice, l'impression sur le film négatif d'un jeu d'informations stockées de façon discontinue sur le support de base.

Selon une caractéristique particulière avantageuse, la deuxième paire de rouleaux de traction est disposée au-dessus de la zone de superposition du film négatif et de la bande réceptrice pour maintenir rectiligne verticalement ladite zone de superposition en assurant une traction constante sur la bande réceptrice.

L'installation comprend des moyens pour appliquer le bain de traitement sur la bande réceptrice et le film dans une cuve de traitement située sous la première paire de rouleaux de traction qui jouent simultanément le rôle de rouleaux d'essorage.

L'installation comprend également de préférence des moyens de récupération et de recyclage du bain de traitement, situés en dessous du trajet de circulation du film négatif et de la bande réceptrice dans la cuve de traitement.

De préférence, la bande réceptrice et le film sont introduits latéralement dans la cuve de traitement et présentent à l'intérieur de cette cuve des trajets symétriques par rapport à un plan vertical défini par la zone de superposition.

Afin d'éviter un épuisement localisé du bain de traitement, la bande réceptrice et le film sont introduits dans la première paire de rouleaux de traction en faisant respectivement un angle compris entre environ 15° et 60° par rapport à la verticale.

La bande réceptrice et le film sont introduits à la partie supérieure de la cuve de traitement et forment chacun une boucle plongeant dans le bain de traitement.

L'installation peut en outre comprendre des moyens de mémorisation d'informations supplémentaires à partir du support de base pour mémoriser des informations supplémentaires lors de l'exposition du film négatif, et des seconds moyens de repérage synchronisés avec lesdits premiers moyens de repérage de l'avancement de la bande réceptrice, et situés en aval de la zone de superposition pour commander l'impression en repérage sur la bande réceptrice des informations supplémentaires mémorisées.

L'installation peut comprendre un carter extérieur étanche à la lumière et des moyens de lavage, de stabilisation et de séchage de la bande réceptrice sont disposés à la sortie de la zone de superposition et en amont des moyens d'impression d'informations supplémentaires s'ils existent.

Avantageusement, les moyens d'exposition du film négatif comprennent un objectif associé à une lampe à éclairs produisant des éclairs auxdits instants intermittents prédéterminés.

L'installation comprend des moyens d'avance automatique du support de base d'un pas prédéterminé après chaque exposition du film.

Le support de base peut se présenter sous la forme d'un support continu ou paravent replié en accordéon, ou sous la forme d'une pluralité de fiches individuelles.

L'installation selon l'invention est particulièrement adaptée à une application à la fabrication de pièces d'identité ou similaires et peut alors être associée à des moyens supplémentaires d'apposition de marques de sécurité sur la bande réceptrice, des troisièmes moyens de repérage des images formées sur la bande, des moyens de découpe de la bande réceptrice pour prélever un format dans la bande, correspondant chacun à une image transférée par le film négatif, et des moyens de conditionnement des formats découpés.

Avantageusement, les premiers, seconds, et troisièmes moyens de repérages sont constitués par des roues à picots coopérant avec des perforations réalisées sur la bande réceptrice.

Les moyens de conditionnement des formats de bande réceptrice comprennent des moyens d'alimentation et de superposition de feuilles transparentes de matière thermoplastique, des moyens de soudage et de refroidissement et des moyens de découpe de formats de bande conditionnés.

Selon un mode de réalisation préférentiel, l'installation comprend des moyens de découpe de la bande réceptrice pour prélever des formats dans la bande, correspondant chacun à une image transférée par le film négatif, un premier dispositif d'alimentation en une bande inférieure de matière thermoplastique, un second dispositif d'alimentation en une bande supérieure de matière thermoplastique, des moyens pour superposer en premier lieu avec la bande inférieure de matière thermoplastique un format à plastifier, des moyens pour sceller localement un format superposé avec ladite bande inférieure thermoplastique, des moyens pour préchauffer chacune des deux bandes de matière thermoplastique de façon indépendante avant leur mise en superposition et le thermoscellage de l'ensemble complexe constitué de la superposition des deux bandes thermoplastiques et du format, des moyens de thermoscellage et de refroidissement, des moyens d'avancement pas à pas et des moyens de découpe des formats plastifiés.

Avantageusement, les moyens de mise en superposition de la bande thermoplastique supérieure et de la bande thermoplastique inférieure porteuse de formats comprend un ensemble transporteur constitué de deux bandes transporteuses disposées respectivement au-dessous et au-dessus du trajet de la bande thermoplastique inférieure porteuse de formats, et de rouleaux permettant l'application d'une pression sur le complexe.

L'installation comprend un outillage de scellage de la surface du complexe correspondant à un format qui est situé en aval des moyens de préchauffage de chacune des deux bandes thermoplastiques, sur le trajet de l'ensemble transporteur.

Dans ce cas, l'installation comprend également des moyens de refroidissement du complexe disposés en aval de l'outillage de scellage de la surface du complexe, sur le trajet de l'ensemble transporteur, et un outillage de scellage de la périphérie du complexe autour du format, avec des outils inférieur et supérieur mobiles verticalement, en aval du trajet de l'ensemble transporteur.

Selon une caractéristique particulière, les moyens pour sceller localement un format superposé à la bande thermoplastique inférieure comprennent un outil chauffant mobile verticalement, à l'intérieur d'une fente ménagée dans une plaque disposée sous le trajet de la bande thermoplastique inférieure dans la zone de mise en superposition d'un format avec la bande thermoplastique inférieure.

Selon un mode de réalisation particulier, les moyens de superposition d'un format à plastifier avec la bande inférieure thermoplastique sont combinés avec les moyens de découpe de la bande réceptrice et comprennent un poinçon déplaçable verticalement par rapport à une matrice disposée entre la bande thermoplastique inférieure et la bande d'amenée des formats.

Selon un autre mode de réalisation particulier dans lequel les formats découpés dans la bande réceptrice sont amenés individuellement sous une forme prédécoupée dans un magasin, les moyens de superposition d'un format à plastifier avec la bande inférieure thermoplastique comprennent un dispositif de préhension constitué par un mécanisme à tiges articulées autour d'axes de pivotement fixes et portant des moyens de saisie d'un format pour saisir un format situé dans le magasin et l'amener en superposition avec la bande thermoplastique inférieure.

Les moyens de préchauffage coopérant avec la bande thermoplastique inférieure sont situés entre la sortie des moyens de superposition d'un format avec la bande thermoplastique inférieure et l'ensemble transporteur de mise en superposition de la bande thermoplastique supérieure et de la bande thermoplastique inférieure porteuse des formats.

Les moyens de préchauffage coopérant avec la bande thermoplastique supérieure sont situés sous la partie de la bande transporteuse disposée au-dessus du trajet de la bande thermoplastique inférieure porteuse de formats, qui sert de guidage à la bande thermoplastique supérieure en amont des rouleaux d'entrée du transporteur.

La présente invention concerne également un procédé pour la mise en œuvre duquel l'installation précédemment décrite est particulièrement adaptée.

Selon ce procédé de saisie de données et de reproduction par transfert pour reporter en continu sur un support par diffusion-transfert à partir d'une image négative intermédiaire, des informations stockées sur le support de base, on impressionne un film négatif en fonction des informations stockées sur le support de base, on superpose au film négatif impressionné, une bande réceptrice, et on met avant leur superposition, le film négatif impressionné et la bande réceptrice en contact avec un bain unique de traitement assurant le développement du film négatif puis, lors de la superposition du film négatif et de la bande réceptrice on réalise le transfert, par diffusion d'une image positive, sur la bande réceptrice, de l'image développée sur le film négatif.

Selon l'invention, pour réaliser la superposition-transfert du film négatif impressionné et de la bande réceptrice, on met en coïncidence le film négatif impressionné et la bande réceptrice à l'entrée de la zone de superposition, on pince simultanément le film et la bande à l'endroit de leur mise en coïncidence pour entraîner ceux-ci de façon simultanée, et à la sortie de ladite zone de superposition, on pince et entraîne la seule bande réceptrice, le film étant entraîné par adhérence sur la bande réceptrice et se séparant librement à la sortie de ladite zone de superposition, on repère l'avancement de la bande réceptrice pour commander par intermittence, à des instants déterminés par la détection de repères formés sur la bande réceptrice, l'impression sur le film négatif d'un jeu d'informations stockées de façon discontinue sur le support de base.

Selon une caractéristique supplémentaire du procédé selon l'invention; en aval de la zone de superposition on découpe la bande réceptrice en formats individuels correspondant chacun à une image transférée par le film négatif, on introduit successivement pas à pas la série de formats à plastifier en une bande thermoplastique inférieure et une bande thermoplastique supérieure en superposant à chaque fois en premier lieu avec la bande thermoplastique inférieure le format à plastifier, on scelle ensuite localement ledit format sur la bande thermoplastique inférieure, on préchauffe de façon indépendante d'une part la bande thermoplastique inférieure sur laquelle ont été fixés localement des formats, et d'autre part la bande thermoplastique supérieure avant sa mise en superposition avec la bande thermoplastique inférieure et on réalise les opérations de thermoscellage et de refroidissement sur l'ensemble complexe constitué de la superposition des deux bandes thermoplastiques préchauffées et du format et on procède au découpage des formats plastifiés.

Dans ce cas, de façon avantageuse, on maintient une pression sur le complexe pendant une première opération de scellage de la surface du complexe correspondant à un format et une opération de refroidissement consécutive à ladite première opération de scellage de surface.

D'autres caractéristiques et avantages de l'invention ressortiront de la description qui fait suite de modes particuliers de réalisation, donnés à titre d'exemples, en référence aux dessins annexés, sur lesquels:

– la figure 1 est une vue schématique d'ensemble d'une installation 100 conforme à l'invention associée à une machine 200 de conditionnement,

– les figures 2 et 2a sont des vues partielles de la figure 1 montrant de face et de profil un ensemble d'impression de négatif à partir d'un support de base porteur d'informations les plaques de guidage de film étant ôtées de la figure 2a,

– la figure 2b est une variante de réalisation du dispositif de la figure 2a avec un support de base formé d'éléments discontinus,

– la figure 3 est une vue partielle agrandie de la figure 1 montrant le dispositif de développement et transfert des images du film négatif impressionné sur une bande réceptrice,

– la figure 4 est une vue partielle de la figure 1 montrant les moyens de rinçage, stabilisation et séchage de l'image formée par transfert sur la bande réceptrice,

– la figure 5 représente un sous-ensemble de l'installation de la figure 1 permettant l'impression d'informations supplémentaires sur la bande réceptrice et la découpe de cette dernière en tronçons de bande, et

– la figure 6 est une vue montrant le dispositif de conditionnement d'un tronçon de bande issu du dispositif de la figure 5,

– la figure 7 est une vue générale schématique d'une installation selon la présente invention, capable de réaliser la plastification de cartes,

– la figure 8 est une vue de détail d'un mode particulier de réalisation d'un dispositif d'introduction de cartes ou formats dans une machine à plastifier, selon l'invention,

– la figure 9 est une vue selon le plan IX–IX de la figure 8,

– la figure 10 est une vue de détail d'un second mode de réalisation d'un dispositif d'introduction de cartes ou formats dans une machine à plastifier, selon l'invention,

– la figure 11 est une vue selon le plan XI–XI de la figure 10.

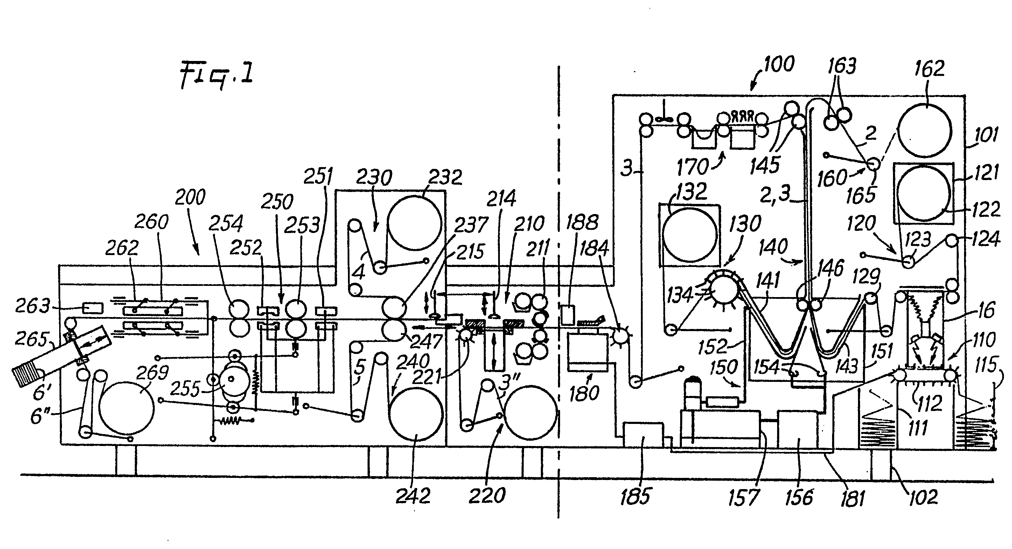

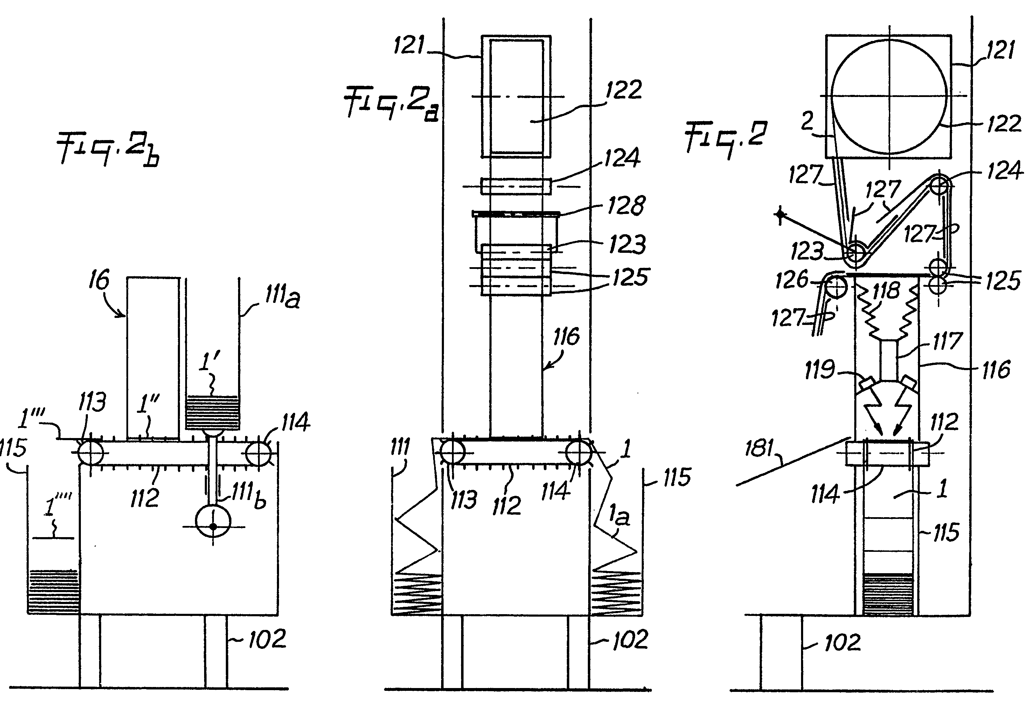

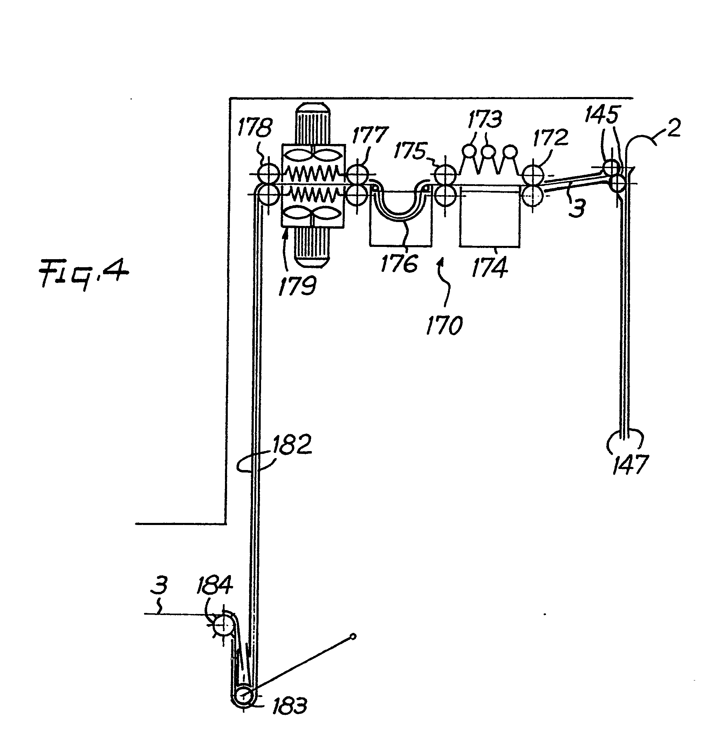

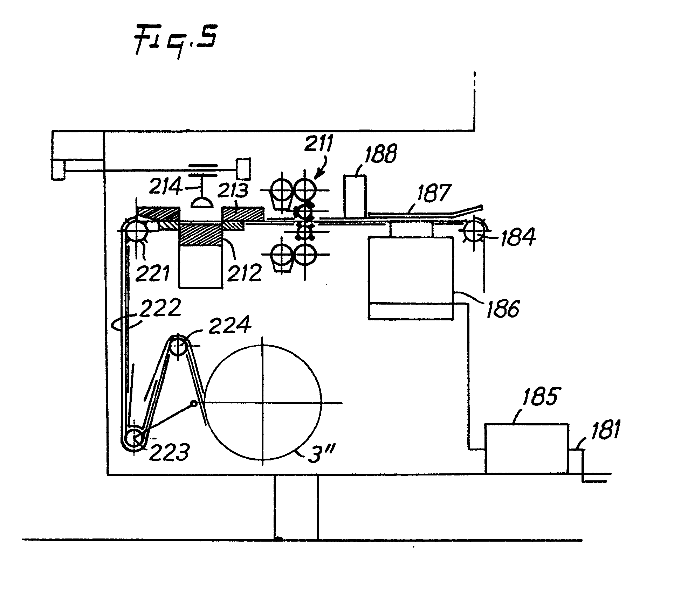

L'installation selon l'invention, qui sera d'abord décrite en référence au schéma d'ensemble de la figure 1 et aux vues de détail des figures 2 à 6, est particulièrement appropriée à la réalisation de titres d'identité à partir d'informations portées sur un support de base 1 et pouvant provenir soit d'un fichier manuel, soit d'un fichier informatisé. L'installation de la figure 1 permet plus précisément de réaliser en continu sur une bande réceptrice 3 une succession de reports de jeux d'informations appliqués de façon discontinue par le support de base 1. Un jeu d'informations peut comprendre, par exemple, des renseignements concernant l'état civil et des éléments graphiques tels qu'une photographie d'identité ou une signature. Le procédé mis en œuvre pour saisir ces informations, du fait qu'il est photographique, s'avère très souple et capable de prendre en compte sans complexité supplémentaire des informations en noir et blanc ou en couleur.

Les figures 2 et 2a représentent un poste de prise de vue pour saisir de façon séquentielle des données portées par un support de base 1 constitué par une bande continue pliée en accordéon, chaque pli 1a comprenant un jeu d'informations à reproduire sur une bande réceptrice 3. L'étage 110 de saisie de données, monté sur le bâti 102 de l'installation, comprend un magasin 111 de stockage du support de base 1, un convoyeur 112 monté sur des rouleaux 113, 114 et portant par exemple des chaînes à picots destinées à coopérer avec des perforations réalisées dans le support de base 1, et un magasin récepteur 115 destiné à stocker les plis ou feuillets 1a du support de base après passage sur le convoyeur 112. Le convoyeur 112 est commandé de manière à avancer pas à pas pour venir positionner tour à tour sous l'appareil de prises de vue 116 des feuillets successifs 1a porteurs de jeux d'informations. L'appareil de prise de vues 116 comprend des moyens 119 d'éclairement d'une fenêtre située au-dessus du convoyeur 112 et devant laquelle viennent successivement se placer les feuillets 1a. Ces moyens d'éclairement sont avantageusement des lampes à éclairs (flashs) réglées électroniquement suivant une lecture automatique des contrastes sur le support de base 1. L'objectif 117 et le soufflet 118 permettent la reproduction sur un film négatif de l'image du jeu d'informations original.

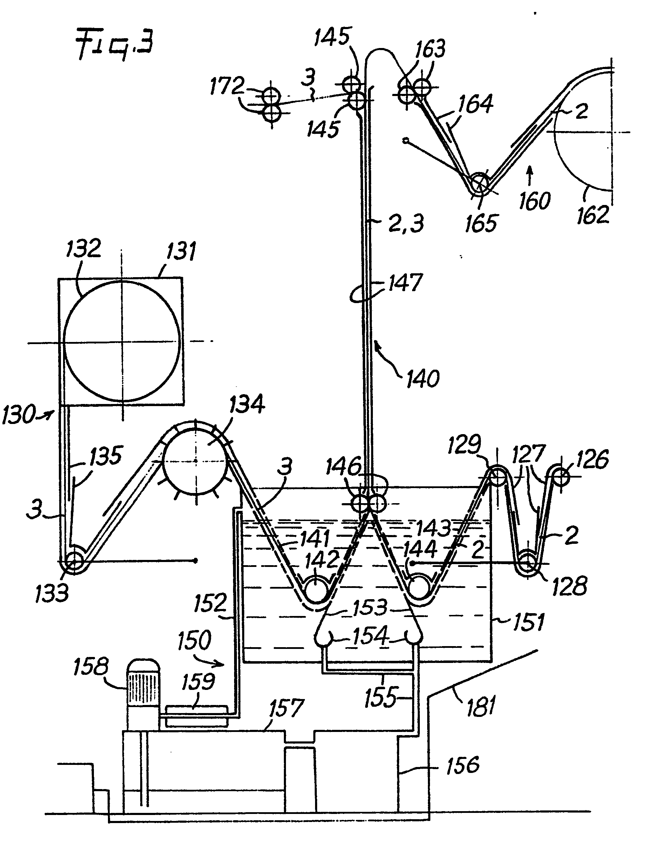

Le rouleau 122 de film 2 destiné à constituer un négatif après exposition à la lumière est monté dans une cartouche 121 formant dévidoir d'un ensemble 120 d'approvisionnement en film et se trouve guidé par plusieurs galets de renvoi 123, 124, 125, 126, de manière à présenter un trajet dont un tronçon, parallèle au convoyeur 112, se trouve en regard de l'appareil de prise de vues 116. La tension du film 2 est réglée par le rouleau de renvoi 123 monté de manière à pouvoir osciller par rapport au bâti. Sur tout son trajet, le film 2 est protégé et guidé par des carénages 127. Par ailleurs, tout le dispositif de saisie d'informations 110, de même que les autres dispositifs 120, 130, 140, 150, 170, qui seront décrits plus loin, sont placés à l'intérieur d'un carter 101 de l'installation, qui est étanche à la lumière. On notera que le film 2 qui est guidé par les galets 123, 124, 125 avant son exposition au niveau de l'appareil de prise de vues 116, puis par des galets 126, 128, 129 (figure 3) après son exposition, peut défiler soit en continu par exemple à une vitesse de l'ordre de 1,50 m par minute, soit de façon discontinue. La tension du film est assurée d'une part par le galet 123 relié au bras de prédévidement 129 d'autre part par le galet 128 associé également à un bras oscillant permettant une compensation et une récupération après un temps de pause dans l'avancement du film 2, due à une exposition du film à partir d'un jeu de données. On notera cependant que dans le cas d'utilisation de lampes flash 119, donnant des éclairs d'une durée très courte (par exemple 1/10 000° de seconde) par rapport à la vitesse de défilement du film, ce dernier peut défiler de façon continue sans arrêt, y compris lors de son exposition. Ceci facilite grandement le fonctionnement de l'installation en évitant des à-coups dans l'entraînement du film 2. L'avance pas à pas du support de base 1 peut elle-même se faire de façon automatique entre chaque prise de vue.

La figure 2b montre une variante de réalisation du dispositif 110 dans laquelle le support de base est constitué par un empilement de fiches individuelles 1' prédécoupées et stockées dans un magasin 111a. Un organe de retenue commandé 111b libère une à une les fiches 1' qui tombent sur le convoyeur 112 et viennent se positionner en 1" sous l'appareil de prise de vues 116. Après exposition du film (non représenté sur la figure 2b) d'une façon analogue au cas des figures 2 et 2a, une fiche 1''' est reprise par le convoyeur 112 et évacuée vers le magasin 115 de récupération des fiches 1''''. Le convoyeur 112 peut naturellement comprendre les organes de guidage formant margeur, non représentés, pour le positionnement d'une fiche 1" sous l'appareil de prise de vues 116.

Les opérations de prise de vues sont commandées à partir du défilement d'une bande réceptrice 3 (figure 3) sur laquelle sera transférée, par contact, l'image formée sur le film 2. La bande réceptrice 3, qui ne comporte pas d'émulsion photosensible, mais peut porter sur une de ses faces, par exemple, une couche de polyéthylène, elle-même couverte d'une couche de gélatine emprisonnant des germes susceptibles de favoriser le transfert des sels d'argent non insolés du négatif 2, est stockée sous forme d'un rouleau 132 dans une cartouche 131 et, après renvoi sur un galet 133 associé à un bras oscillant de prédévidement et sur une roue 134 telle qu'une roue à picots montée folle, pénètre dans une enceinte 151 de traitement. Des carénages 135 protègent et guident sur chaque face la bande réceptrice 3 sur tout son trajet. La bande 3, après avoir pénétré, entourée d'un couloir de guidage perforé 141, dans l'enceinte de traitement 151, est saisie après renvoi sur un rouleau 142 par une paire de rouleaux pinceurs d'entraînement 146. Le film 2 guidé et protégé par les couloirs de guidage 127, 144 pénètre également dans l'enceinte 151 et se trouve également pincé par les rouleaux 146 après renvoi sur un rouleau 144, et superposé à la bande réceptrice 3, la face de l'émulsion du négatif 2 étant en contact avec la couche de germes déposée sur la bande réceptrice 3. Au niveau de la paire de rouleaux 146, il est ainsi réalisé un entraînement continu simultané de la bande réceptrice 3 et du film impressionné 2. Du fait que les rouleaux pinceurs 146 sont lisses, l'entraînement est réalisé sans à-coups et sans risque d'endommagement des bandes. La roue à picots 134 qui coopère avec des perforations formées sur la bande 3 déclenche un micro-interrupteur pour délivrer à chaque tour une impulsion de commande de prise de vues. Les opérations de prise de vue sont ainsi toujours subordonnées au défilement de la bande 3, et du film 2 qui est lui-même entraîné par les rouleaux 146. Si pour une raison quelconque la vitesse de défilement de la bande 3 est modifiée, les opérations de prise de vues sont également soit plus espacées, soit plus rapprochées, pour tenir compte de la modification correspondante de la vitesse de défilement du film 2.

Naturellement, d'autres organes de repérage que la roue à picots 134 pourraient être utilisés pour détecter des repères formés sur la bande 3. On notera qu'il est important que les opérations de prise de vues et d'exposition du film 2 soient commandées à partir de la bande 3, car celle-ci, lors de la fabrication des titres d'identité par exemple, comprend déjà des éléments, tels que des filigranes, ou des mentions préimprimées, dont la position n'est pas indifférente par rapport aux images qui seront formées à partir des jeux d'informations saisis sur le support de base 1. Toutefois, selon l'invention, du fait que l'entraînement du la bande 3 et du film 2 est réalisé par un organe commun 146 disposé au début de la phase de transfert de l'image formée sur le film 2, le positionnement par rapport à la bande réceptrice 3 des images formées sur le film 2 s'avère particulièrement précis.

L'opération de développement du film 2 est réalisée à l'aide d'un bain unique à l'intérieur de l'enceinte 151. Le liquide de développement est introduit par la canalisation 152 à la partie supérieure du bac 151 et assure l'humidification de la bande 3 et le développement des images latentes du film 2 au cours du trajet situé à l'intérieur de la cuve de développement 151. Les rouleaux d'entraînement 146 situés à la partie supérieure de l'enceinte 151 au dessus du niveau du liquide servent également de rouleaux d'essorage. Des gouttières aspirantes 153, 154 disposées sous le trajet de la bande 3 et du film 2 permettent la récupération du liquide de traitement à la partie inférieure de la cuve 151, l'évacuation du bain usé par des canalisations 155 vers un bassin de décantation 156, puis une chambre de régénération 157. Le bain recyclé peut alors être pompé à l'aide d'une pompe de circulation 158, remis en température dans un échangeur 159 et réinjecté dans l'enceinte de traitement 151 par les canalisations 152.

Comme on peut le voir sur la figure 3, la bande réceptrice 3 et le film 2 sont introduits à la partie supérieure de la cuve de traitement 151, latéralement sur deux côtés opposés situés de part et d'autre de la paire de rouleaux essoreurs 146. Le film 2 et la bande réceptrice 3, guidés respectivement par deux couloirs perforés de guidage 143, 141, plongent dans le bain de la cuve 151 puis, après renvoi sur des rouleaux 144, 142 sont introduits par le bas entre les rouleaux pinceurs et essoreurs 146. Les trajets du film 2 et de la bande réceptrice 3 à l'intérieur de la cuve 151 sont sensiblement symétriques par rapport au plan vertical défini par la zone de superposition du film 2 et de la bande 3 au-dessus des rouleaux 146. De même, l'ensemble du trajet de la bande réceptrice 3 entre le dévidoir 131 et les rouleaux pinceurs 146 est de préférence d'une longueur à peu près voisine de celle du trajet du film 2 entre le poste de prise de vue 16 et les rouleaux pinceurs 146. Le poste de prise de vue 110 est lui-même disposé à proximité immédiate de la cuve 151 d'un côté par rapport au plan de la zone de superposition 2, 3, tandis que le dévidoir 131 pour la bande réceptrice 3 est situé à proximité de la cuve 151 en étant symétrique du poste de prise de vue 110 par rapport à la zone de superposition 147.

Le film 2 et la bande 3 sont dirigés par les rouleaux de renvoi 144, 142 vers les rouleaux pinceurs 146 en faisant un angle compris entre environ 15° et 60° et de préférence voisin de 30° par rapport à la verticale qui correspond au plan de la zone de superposition 147. Ceci permet de dégager dans la cuve 151 une zone triangulaire qui évite l'emprisonnement d'une fraction de bain non renouvelé sous les rouleaux essoreurs 146.

La phase de transfert sur la bande réceptrice 3 est réalisée après la mise en contact du film 2 développé et de la bande 3 imbibée de liquide, au niveau des rouleaux d'entraînement et d'essorage 146. La phase de transfert est rendue possible grâce à une zone de superposition du film 2 et de la bande 3 réalisée au-dessus des rouleaux d'entraînement 146. Cette zone de superposition peut être limitée par deux plaques latérales 147 situées de part et d'autre de la superposition bande 3-film 2. La longueur de cette zone est choisie, compte-tenu des vitesses de défilement de la bande 3, pour que le temps de transfert par contact des sels d'argent du film 2 sur la bande réceptrice 3 puisse se réaliser intégralement. Le temps de transfert peut être par exemple de l'ordre de 45 secondes. Dans la zone de superposition, le film 2 est entraîné par adhésion à la bande réceptrice 3 tandis qu'une paire de rouleaux 145 pince la bande réceptrice 3 à la sortie de la zone de superposition, pour maintenir tendue la bande et aider à son défilement à tension constante. On notera que le film 2 qui, à l'entrée de la zone de superposition, est entraîné par la paire de rouleaux 146, peut se séparer librement en formant une boucle, à la sortie de la zone de superposition. Il n'est ainsi exercé aucune contrainte particulière sur le film 2 et les inconvénients de l'art antérieur dûs à une rétractation plus grande du film négatif 2 par rapport à la bande réceptrice 3 sont éliminés, puisque le film 2 n'a pas à être entraîné par des roues à picots. Le négatif 2, après sa séparation automatique de la bande 3 à la sortie de la zone de superposition 147, est repris de façon classique par des rouleaux 163, 165 et des plaques de guidage 164 pour être récupéré sur une bobine 162 et être évacué pour destruction.

La bande 3, après avoir été reprise par les rouleaux pinceurs 145, est entraînée vers un ensemble 170 de lavage, stabilisation, séchage. La bande 3 est ainsi introduite par les rouleaux 172 dans un poste de lavage comprenant des buses de pulvérisation 173 et un bac récepteur 174, puis par des rouleaux 175 dans un poste de stabilisation 176 destiné à éviter une altération ultérieure des sels d'argent transférés sur la bande 3 au cours des opérations de traitement subséquentes. Enfin, la bande 3 est introduite par les rouleaux 177 dans un poste de séchage 179 avant d'être évacuée par les rouleaux de sortie 178 vers un ensemble 180 d'inscription d'informations supplémentaires.

Dans le cas où des informations supplémentaires figurant sur le support de base 1 doivent être saisies non pas par un procédé photographique, mais reportées par un autre mode de reproduction, par exemple par impression au verso de la bande réceptrice 3, lors de la prise de vues dans le poste 110 de saisie de données, les informations supplémentaires sont mémorisées dans un poste d'attente 185, par la ligne 181, en synchronisme avec l'ordre de lecture du support de base donné par l'organe 134 de contrôle de l'avancement de la bande 3, puis restituées dans un poste 186, 187, 188 d'impression à un instant déterminé par la roue 184 de détection de l'avancement de la bande 3. La roue à picots 184, qui est synchronisée avec la roue 134 donne les ordres d'impression des informations supplémentaires.

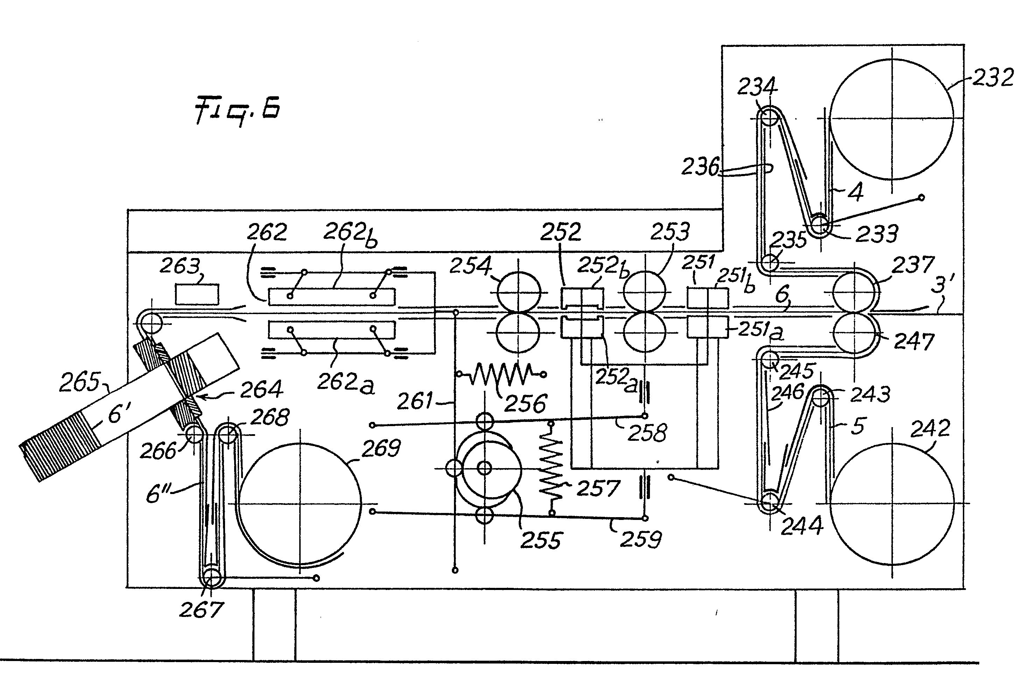

Après passage au poste d'impression des informations supplémentaires, la bande réceptrice 3 peut être réembobinée pour être stockée temporairement avant découpe et utilisation. Dans ce cas, la bande stockée peut être ensuite introduite dans une machine à plastifier par thermoscellage 200 (Figure 6) d'une façon tout à fait indépendante de l'utilisation de la machine 100 de saisie de données et de reproduction par transfert. Toutefois, comme représenté sur la figure 1, la machine à plastifier 200 peut être montée en ligne avec l'installation de saisie et de reproduction par transfert, permettant ainsi un traitement en continu conduisant à des produits finis 6' se présentant sous la forme de cartes porteuses d'informations et plastifiées.

Dans un premier ensemble 210 disposé en amont de la machine à plastifier proprement dite 200, la bande 3 en provenance du poste d'impression 180 est munie d'éléments de sécurité, tels que des repères luminophores, déposés selon un motif prédéterminé. Ces repères sont destinés à caractériser l'origine de la fabrication de la bande 3 et à empêcher des falsifications.

L'ensemble 210 comprend également des moyens (poinçon 212, matrice 213) de découpe des formats avec repérage à l'aide par exemple d'une roue à picots 221 du type des roues 134, 184, qui peuvent par exemple comprendre douze picots assurant à chaque tour l'avance d'une longueur d'image. Chaque format 3' découpé dans la bande 3 correspond à l'une des images formées par diffusion transfert à partir des jeux d'informations saisis dans le poste 110 de prise de vue. Le squelette 3'' de la bande 3 est évacué en étant guidé par des plaques 222 et des rouleaux 223, 224 avant d'être réembobiné et détruit. Un margeur 214, 215 comprenant par exemple des éléments de préhension à ventouse assure la mise en place des formats 3' découpés, dans la machine à plastifier proprement dite.

Deux bandes de matière thermoplastique 4, 5 sont amenées entre des rouleaux supérieur 237 et inférieur 247 de laminage qui peuvent être chauffants. La bande supérieure 4 est amenée à partir d'un ensemble supérieur 230 de fourniture de matière plastique comprenant une bobine 232, des rouleaux de renvoi 233, 234, 235 et des plaques de guidage 236. Le rouleau 233 est associé à un bras oscillant pour maintenir la bande 4 tendue tout en assurant un prédévidement de la bande 4. De façon similaire, la bande inférieure 5 est amenée à partir d'un ensemble fournisseur inférieur 240 comprenant une bobine 242, des rouleaux de renvoi 243, 244, 245 et des plaques de guidage 246. Le rouleau 244 associé à un bras oscillant joue un rôle analogue à celui du rouleau 233.

En aval des rouleaux 237, 247 de laminage, le complexe 6 formé par les bandes superposées 4, 5 entre lesquelles a été inséré un format 3' est conduit à un étage de thermoscellage 250 puis à un étage 260 de découpe en cartes finales 6'. L'étage de thermoscellage comprend un outillage 251 de scellage de la surface du complexe 6 correspondant à un format 3', avec des outils inférieur 251a et supérieur 251b mobiles verticalement, une paire de cylindres 253 de refroidissement, un outillage 252 de scellage de la périphérie du complexe 6 autour du format 3', avec des outils inférieur 252a et supérieur 252b mobiles verticalement et une paire de seconds cylindres 254 de refroidissement. Des pinces 262, éventuellement refroidies par circulation d'eau, avec des mâchoires inférieure 262a et supérieure 262b saisissent le complexe 6 après son scellement pour l'amener devant un dispositif 263 de contrôle de la présence des agents de sécurité précédemment introduits dans le format 3', puis dans un dispositif de découpe 264 avec un poinçon et matrice assurant l'éjection dans un magasin de réception 265, des cartes finales plastifiées et découpées 6', tandis que le squelette 6'' formé par les restes des bandes de matière plastique 4, 5 est évacué après renvoi sur des rouleaux 266, 267, 268 vers une bobine 269.

Les déplacements longitudinaux pas à pas des pinces 262, de même que leur ouverture, fermeture ainsi que les mouvements de déplacement vertical des parties supérieures 251b, 252b des outils de thermoscellage, sont commandés en synchronisme à partir d'un mécanisme comprenant des cames 255, des tiges de commande 258, 259 et des ressorts de rappel 256, 257. La progression pas à pas du complexe 6 à travers les étages 250 et 260 est la suivante. Lors d'une rotation des rouleaux 237, 247; 253 et 254 qui sont synchronisés, un format 3', présenté par le margeur 214, 215, est introduit entre les deux bandes de matière plastique supérieure 4 et inférieure 5, au niveau des cylindres lamineurs 237, 247, qui amènent la portion de complexe 6 contenant le format 3' au premier poste de thermoscellage 251. La portion de complexe 6 contenant un format 3' précédent et qui a déjà été thermoscellée au poste 251 est entraînée par les cylindres refroidisseurs 253 vers le second poste de thermoscellage 252. De même, la portion de complexe 6 contenant un autre format précédent 3' qui a déjà été thermoscellée au poste 252 est saisie par la pince 262 pour être conduite au dispositif de découpage 264 en passant devant l'appareil de lecture 263. Pendant le temps de retour à vide de la pince 262, l'avance du complexe 6 est stoppée, les dispositifs de thermoscellage 251, 252 entrent en action et le margeur 214, 215 commandé par la roue de repérage d'image 221 amène un autre format 3' à l'entrée des cylindres de laminage 237, 247. Un nouveau cycle d'avance d'un pas peut alors être effectué.

D'une manière générale, la présente invention est particulièrement avantageuse dans la mesure où lors de la saisie d'informations et du report par diffusion transfert, un repérage peut être effectué en permanence sur la bande réceptrice 3, par exemple à l'aide de perforations formées le long des bords longitudinaux de cette bande, tandis que le film 2 n'intervient pas lui-même pour le repérage mais n'a qu'un rôle suiveur. Par suite, on évite les inconvénients des systèmes dans lesquels à la fois le film 2 et la bande réceptrice 3 ont un rôle de repérage, ces inconvénients provenant essentiellement des caractéristiques mécaniques différentes du film 2 et de la bande 3 qui empêchent de former des repères réguliers présentant un même espacement à la fois sur le film et la bande.

Par ailleurs, on a décrit plus haut un dispositif de prise de vues 110 adapté à la saisie instantanée d'informations fournies de façon discontinue (par exemple à des intervalles de quelques secondes) à partir d'un support de données mécanique constitué par un paravent 1, ou des fiches individuelles 1'. L'installation selon l'invention, dont les avantages proviennent essentiellement de la manière dont coopèrent entre eux le film négatif 2 et la bande réceptrice 3, peut aussi être appliquée à la saisie de données fournies à partir d'autres types de support de données, comme par exemple un écran d'affichage qui serait disposé en regard de la fenêtre de l'appareil de prise de vue 16, si les données sont fournies à partir d'un fichier informatisé par exemple. Dans le cas d'un affichage de données à l'aide d'un rayonnement laser par exemple, les moyens d'éclairement 119 ne sont naturellement plus utiles et l'appareil de prise de vue 16 destiné à former l'image des jeux d'informations affichées, sur le négatif 2 ne doit plus comprendre que l'objectif 117 et la chambre 118.

Il est également possible d'utiliser des informations enregistrées se présentant sous forme numérique qui peuvent être directement décodées et reportées sur le film négatif 2 à l'aide d'un faisceau laser par exemple, sans qu'il soit même nécessaire de procéder à un affichage intermédiaire et d'utiliser un objectif 117 et une chambre 118.

Le support de base 1 peut ainsi présenter des structures très variées et peut être constitué par des bandes magnétiques, des disques, ou d'autres types de mémoires dans lesquelles les informations sont enregistrées sous une forme électrique ou magnétique. Le dispositif de lecture des informations enregistrées, chargé d'impressionner le film négatif 2 en reportant sur celui-ci des séries d'informations lues successivement sur le support de base 1 peut ainsi se présenter sous des formes très variées.

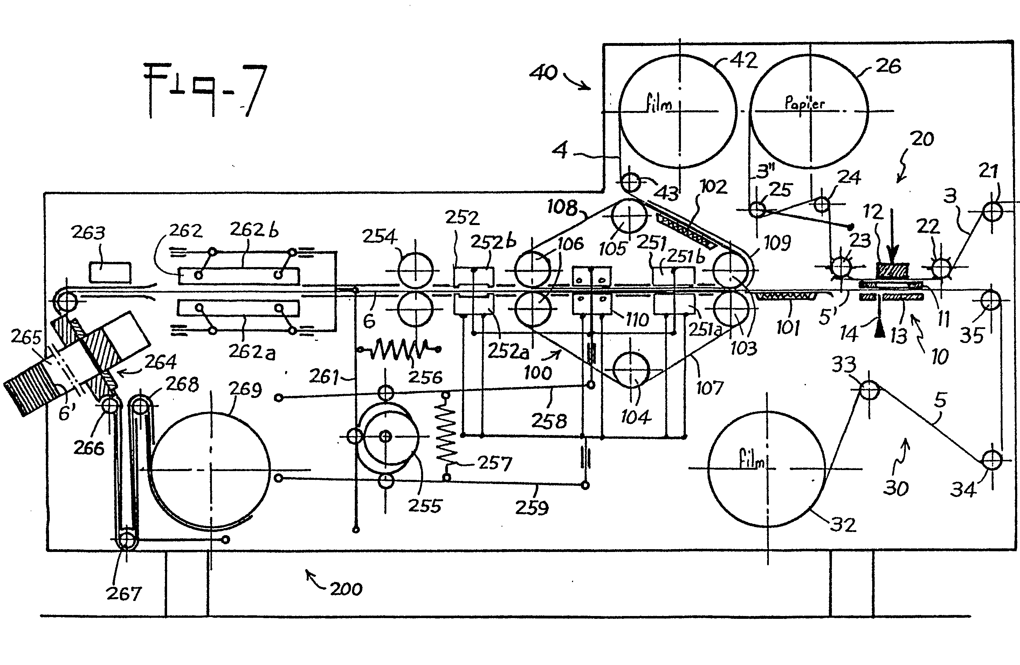

On a indiqué plus haut la possibilité de mettre en œuvre une machine à plastifier par thermoscellage 200 conduisant à des produits finis 6' se présentant sous la forme de cartes plastifiées porteuses d'informations qui, du fait même de la plastification, sont protégées d'une manière efficace contre les détériorations et la falsification, les produits finis 6' pouvant ainsi constituer des titres d'identité par exemple. Les figures 7 à 11 présentent des variantes avantateuses de la machine à plastifier de la figure 6.

A l'entrée de la machine à plastifier 200 de la figure 7, on trouve un ensemble 20 de formation d'éléments individuels sous forme de cartes ou formats 3' à partir d'une bande continue par exemple en papier 3, et de mise en superposition des formats 3' avec une bande 5 de matrice thermoplastique provenant d'un dispositif fournisseur 30. Des moyens 10 sont de plus associés à l'ensemble 20 de mise en superposition de formats 3' avec la bande thermoplastique 5 pour fixer localement chaque format 3' dans une position prédéterminée sur la bande thermoplastique inférieure 5.

L'ensemble 20 de formation de formats 3' comprend des moyens de découpe des formats à l'aide d'un poinçon 12 mobile verticalement et d'une matrice 11 disposée sous le poinçon. Des roues 22, 23 d'entraînement à picots permettent un repérage de l'avance de la bande de matière 3 dans laquelle doivent être découpés les formats 3'. De cette façon, il est aisé de fabriquer des cartes individuelles portant chacune une image bien définie. Les roues 22, 23 peuvent par exemple comprendre douze picots assurant à chaque tour l'avance d'une longueur d'image. Chaque format 3' peut alors correspondre à l'une des images faisant partie d'une succession d'images régulièrement réparties sur la bande 3 guidée par le rouleau 21 en amont du dispositif de découpe 12, 13. Le squelette 3'' de la bande 3 évidée est évacué en étant guidé par des rouleaux 24, 25 avant d'être réembobiné pour former une bobine 26 qui sera détruite.

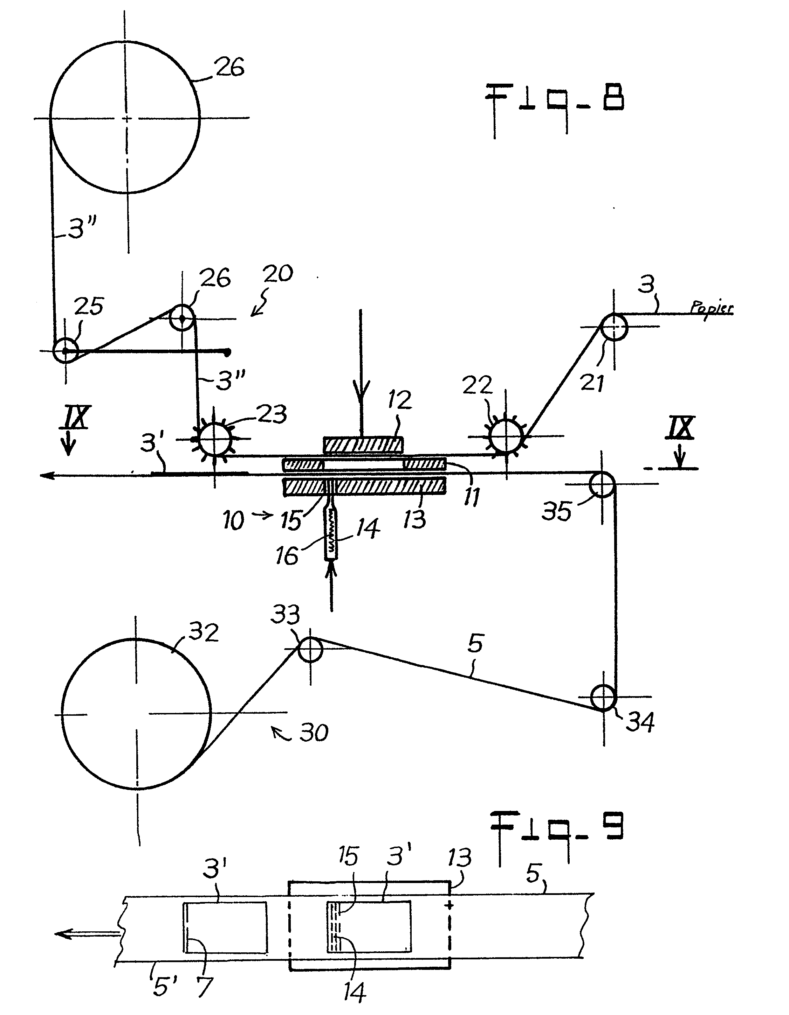

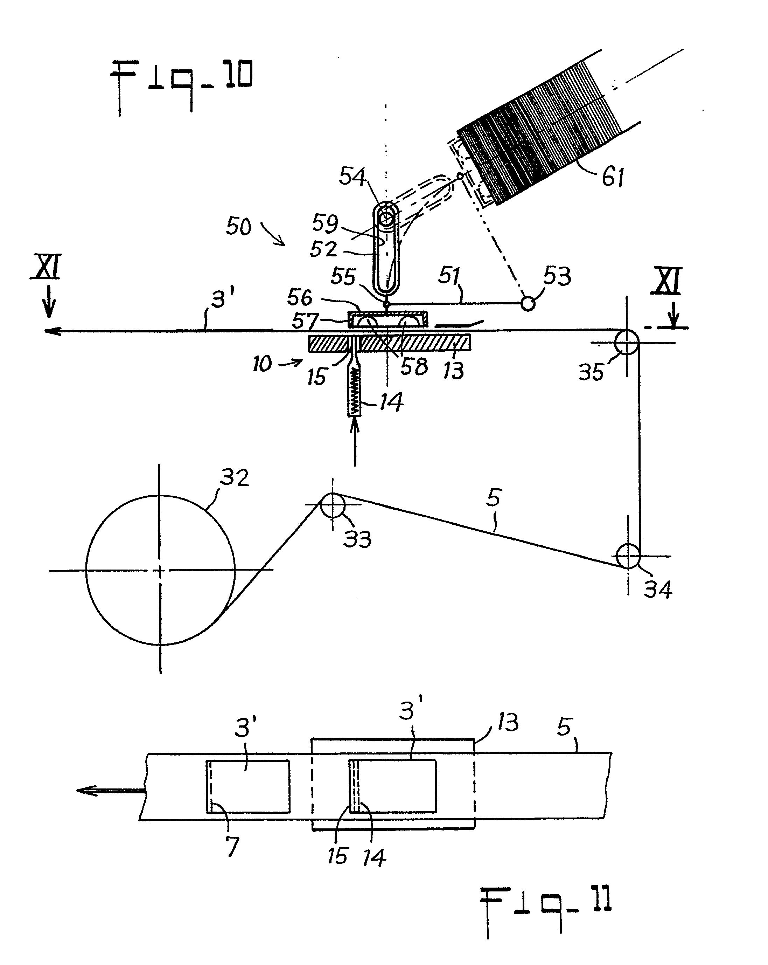

La bande thermoplastique inférieure 5 est amenée à partir d'un ensemble inférieur 30 de fourniture de matière plastique comprenant une bobine 32, des rouleaux de renvoi 33, 34, 35 et éventuellement des plaques de guidage. Comme on peut le voir sur les figures 8 et 9, une plaque 13 est disposée sous le trajet de la bande thermoplastique inférieure 5, au niveau de la matrice 11, c'est-à-dire sous la zone de mise en superposition d'un format 3' découpé par le poinçon 12 dans la bande 3 et de la bande thermoplastique 5. Une fente 15 est ménagée dans la plaque 13 au voisinage de la partie aval de l'ouverture de la matrice 11 et permet le passage d'un organe chauffant 14 équipé par exemple d'une résistance électrique chauffante 16. L'organe chauffant 14, dont la tête peut présenter la forme d'une arrête perpendiculaire au sens de défilement de la bande thermoplastique 5, est mobile verticalement de manière à pouvoir venir chauffer localement à des instants prédéterminés, correspondant à la présence d'un format 3' dans la matrice 11, la bande thermoplastique 5. La bande thermoplastique 5, qui peut être transparente, peut comprendre une face extérieure protégée par exemple en polyester et une face intérieure en contact avec une carte 3' en polyéthylène. Après la découpe d'une carte dans la matrice 11, le poinçon 12 continue de presser un court instant la carte 3' contre la face intérieure de la bande thermoplastique 5 dont la face extérieure porte sur la plaque support 13, tandis que l'élément chauffant 14 est déplacé vers le haut et vient chauffer localement la bande thermoplastique 5 provoquant la fixation ponctuelle partielle par thermoscellage de la carte 3' sur le bande 5. L'opération de scellage local une fois terminée, le poinçon 12 remonte tandis que l'organe chauffant 14 redescend et la bande inférieure 5 qui était arrêtée avance d'un pas, entraînant le format 3' fixé le long d'une ligne de scellage 7 et constituant une bande 5' chargée de formats. Naturellement, l'organe chauffant 14 peut présenter différentes formes adaptées au genre de scellage local qui est souhaité, et pourrait aussi être placé ailleurs qu'au voisinage de la partie aval de l'ouverture de la matrice 11 par rapport au sens de défilement de la bande 5. Toutefois, un scellage local 7 au voisinage du bord avant des formats 3' s'avère particulièrement avantageux.

Les figures 10 et 11 montrent un autre mode de réalisation d'un dispositif de mise en superposition de formats 3' et d'une bande thermoplastique 5.

Dans le cas de ce deuxième mode de réalisation, le dispositif 30 de fourniture d'une bande thermoplastique reste inchangé, de même que l'organe chauffant 14 qui coopère avec une plaque 13. En revanche, les cartes 3' à plastifier sont prédécoupées et stockées dans un magasin 61. Le dispositif 50 de mise en superposition des cartes 3' et de la bande 5 peut alors présenter une structure différente de l'ensemble poinçon 12 matrice 11 de la figure 8. Ce dispositif 50 peut comprendre un margeur composé d'une tête de préhension 56 munie de ventouses 58 ou autres organes de saisie, et articulée à l'aide de deux bras 51, 52 autour de deux axes fixes 53, 54. La tête de préhension 56 est reliée par une articulation 55 d'une part à l'extrémité d'un bras 51 dont l'autre extrémité est reliée à l'axe fixe de pivotement 53, et d'autre part, à l'extrémité d'un bras évidé 52 muni d'une lumière 59 qui permet un basculement autour du deuxième axe fixe 54 engagé dans la lumière 59. La tête de préhension 56 peut ainsi saisir une carte 3' lorsqu'elle est basculée en position haute (en pointillés sur la figure 10) et venir ensuite déposer cette carte sur la bande 5 lorsqu'elle est basculée en position basse (en traits continus sur la figure 10). Le rebord 57 de la tête de préhension 56 sert également de butée pour un format 3' lorsque l'organe chauffant 14 est en position haute pour réaliser un scellage local du format 3' sur la bande 5.

Si l'on considère à nouveau la figure 7, on voit qu'un élément de préchauffage 101 est disposé au voisinage de la bande 5' chargée de formats 3', en aval du dispositif de scellage local 10 pour amener cette bande 5' à une température inférieure à la température de fusion.

De même un élément de préchauffage similaire 102 est disposé au voisinage du trajet de la bande thermoplastique 4 qui est amenée à partir d'un ensemble supérieur 40 de fourniture de matière plastique comprenant une bobine 42, un rouleau de renvoi 43 et une plaque de guidage 109.

Les bandes thermoplastiques inférieure 5' et supérieure 4 sont introduites simultanément dans un dispositif transporteur 100, en aval des éléments de préchauffage 101, 102. Le dispositif transporteur 100 comprend une paire de rouleaux presseurs 103 d'introduction, une paire de rouleaux presseurs 106 de sortie et deux bandes transporteuses inférieure 107 et supérieure 108 qui peuvent être métalliques et éventuellement téflonnées. La bande transporteuse inférieure 107 circule autour des rouleaux inférieurs 103, 106 et d'un rouleau tendeur inférieur 104 tandis que la bande transporteuse supérieure 108 circule autour des rouleaux supérieurs 103, 106 et d'un rouleau tendeur supérieur 105. Sur leur trajet rectiligne parallèle à la circulation de la bande complexe 6 composée de la bande inférieure thermoplastique 5' portant les formats 3' et de la bande supérieure thermoplastique 4, les bandes 107 et 108 exercent une pression sur la bande complexe 6 tout en assurant l'entraînement de celle-ci. La bande complexe 6 est ainsi maintenue entre deux plans sur tout le trajet au cours duquel elle est soumise à un thermoscellage de sa surface à l'aide d'un outillage 251 comprenant des outils inférieur 251a et supérieur 251b mobiles verticalement, et à un refroidissement actif à l'aide de moyens de refroidissement 110 disposés en aval de l'outillage 251 de scellage de la surface du complexe 6.

La présence du dispositif transporteur à bandes 100 permet de fabriquer un produit fini de meilleure apparence, parfaitement plan, et la présence de moyens actifs 110 de refroidissement garantit la formation d'une enveloppe de matière plastique dont la transparence sera plus grande que si le refroidissement réalisé était progressif.

Un outillage 252 de scellage de la périphérie d'un ensemble complexe 6 autour d'un format 3', avec des outils inférieur 252a et supérieur 252b mobiles verticalement, et une paire de cylindres de refroidissement 254 sont disposés à la suite du dispositif transporteur 100.

Le dispositif de découpe 204, les pinces 262, les outils de thermoscellage 251, 152 et le mécanisme 255 de commande de ces éléments sont analogues aux dispositifs correspondants de la figure 6 et ne seront pas décrits une nouvelle fois.

Dans le cas de la figure 7, la progression pas à pas du complexe 6 à travers les étages 100, 250 et 260 est la suivante. Lors d'une rotation des rouleaux 103, 106 et 254 qui sont synchronisés, un format 3', porté par la bande inférieure 5, est introduit sur la bande de matière plastique supérieure 4 au niveau des cylindres 103 du dispositif transporteur 100 qui amènent la portion de complexe 6 contenant le format 3' au premier poste de thermoscellage 251. La portion de complexe 6 contenant un format 3' précédent et qui a déjà été thermoscellée au poste 251 est refroidie par les moyens 110 de refroidissement, puis entraînée vers le second poste de thermoscellage 252. De même, la portion de complexe 6 contenant un autre format précédent 3′ et qui a déjà été thermoscellée au poste 252 est saisie par la pince 262 pour être conduite au dispositif de découpe 264 en passant devant l'appareil de lecture 263. Pendant le temps de retour à vide de la pince 262, l'avance du complexe 6 est stoppée, les dispositifs de thermoscellage 251, 252 entrent en action et le poinçon 12 peut préparer un nouveau format 3′ qui sera ensuite amené à l'entrée 103 du dispositif transporteur 100. Un nouveau cycle d'avance d'un pas peut alors être effectué.

## Revendications

1. Installation de saisie de données et de reproduction par transfert pour reporter en continu sur un support par le procédé photographique de transfert par diffusion à partir d'une image négative intermédiaire, des informations stockées de façon discontinue sur un support de base, comprenant un dispositif (110) pour impressionner un film négatif (2) en fonction des informations stockées sur le support de base (1), un dispositif (140) pour superposer au film négatif impressionné (2) une bande réceptrice (3), et des moyens (150) pour mettre, avant leur superposition, le film négatif impressionné (2) et la bande réceptrice (3) en contact avec un bain unique de traitement assurant le développement du film négatif (2) puis, lors de la superposition du film négatif et de la bande réceptrice, le transfert, par diffusion d'une image positive, sur la bande réceptrice (3), de l'image développée sur le film négatif (2), caractérisée en ce que le dispositif (140) de superposition-transfert du film négatif impressionné et de la bande réceptrice comprend une première paire de rouleaux de traction (146) disposés à l'entrée de la zone (147) de superposition du film négatif impressionné (2) et de la bande réceptrice (3) pour pincer et entraîner simultanément le film (2) et la bande (3) superposés et une deuxième paire de rouleaux de traction (145) disposés à la sortie de ladite zone de superposition (147), pour pincer et entraîner la seule bande réceptrice (3), le film (2) étant entraîné par adhérence sur la bande réceptrice et se séparant librement à la sortie de ladite zone de superposition (147), et en ce que des premiers moyens (134) de repérage de l'avancement de la bande réceptrice (3) sont prévus pour commander par intermittence, à des instants déterminés par la détection de repères formés sur la bande réceptrice (3), l'impression sur le film négatif (2) d'un jeu d'informations stockées de façon discontinue sur le support de base (1).

2. Installation selon la revendication 1, caractérisée en ce que la deuxième paire de rouleaux de traction est disposée au-dessus de la zone de superposition du film négatif (2) et de la bande réceptrice (3) pour maintenir rectiligne verticalement ladite zone de superposition en assurant une traction constante sur la bande réceptrice (3).

3. Installation selon la revendication 1 ou la revendication 2, caractérisée en ce qu'elle comprend des moyens (150) pour appliquer le bain de traitement sur la bande réceptrice (3) et le film (2) dans une cuve de traitement (151) située sous la première paire de rouleaux de traction (146) qui jouent simultanément le rôle de rouleaux d'essorage.

4. Installation selon la revendication 3, caractérisée en ce qu'elle comprend des moyens (153, 154, 155) de récupération et de recyclage (156, 157, 158, 159) du bain de traitement, situés en dessous du trajet de circulation du film négatif (2) et de la bande réceptrice (3) dans la cuve de traitement (151).

5. Installation selon la revendication 2 et la revendication 3 ou 4, caractérisée en ce que la bande réceptrice (3) et le film (2) sont introduits latéralement dans la cuve de traitement (151) et présentent à l'intérieur de cette cuve (151) des trajets symétriques par rapport à un plan vertical défini par la zone de superposition.

6. Installation selon la revendication 2 et l'une quelconque des revendications 3 à 5, caractérisée en ce que la bande réceptrice (3) et le film (2) sont introduits dans la première paire de rouleaux de traction (146) en faisant respectivement un angle compris entre environ 15° et 60° par rapport à la verticale.

7. Installation selon l'une quelconque des revendications 3 à 6, caractérisée en ce que la bande réceptrice (3) et le film (2) sont introduits à la partie supérieure de la cuve de traitement (151) et forment chacun une boucle plongeant dans le bain de traitement.

8. Installation selon l'une quelconque des revendications 1 à 7, caractérisée en ce qu'elle comprend en outre des moyens (180) de mémorisation d'informations supplémentaires à partir du support de base (1) pour mémoriser des informations supplémentaires lors de l'exposition du film négatif (2) et des seconds moyens de repérage (184) synchronisés avec lesdits premiers moyens (134) de repérage de l'avancement de la bande réceptrice (3) et situés en aval de la zone (147) de superposition pour commander l'impression en repérage sur la bande réceptrice (3) des informations supplémentaires mémorisées.

9. Installation selon l'une quelconque des revendications 1 à 5, caractérisée en ce qu'elle comprend un carter extérieur (101) étanche à la lumière et en ce que des moyens de lavage (173, 174), de stabilisation (176) et de séchage (179) de la bande réceptrice (3) sont disposés dans le carter en aval des rouleaux de traction (145) disposés à la sortie de la zone de superposition (147) et en amont des moyens (186, 187) d'impression d'informations supplémentaires s'ils existent.

10. Installation selon l'une quelconque des revendications 1 à 9, caractérisée en ce que les moyens (110) d'exposition du film négatif (2) comprennent un objectif (117) associé à une lampe à éclairs (119) produisant des éclairs auxdits instants intermittents prédéterminés.

11. Installation selon l'une quelconque des revendications 1 à 10, caractérisée en ce qu'elle comprend des moyens d'avance automatique du support de base (1) d'un pas prédéterminé après chaque exposition du film (2).

12. Installation selon l'une quelconque des revendications 1 à 11, appliquée à la fabrication de pièces d'identité ou similaires, caractérisée en ce qu'elle est associée à des moyens supplémentaires (211) d'apposition de marques de sécurité sur la bande réceptrice (3), des troisièmes moyens de repérage (221) des images formées sur la bande (3) des moyens (212, 213) de découpe de la bande réceptrice (3) pour prélever un format (3') dans la bande, correspondant chacun à une image transférée par le film négatif (2), et des moyens (230 à 260) de conditionnement des formats découpés (3').

13. Installation selon l'une quelconque des revendications 1 à 12, caractérisée en ce que des premiers (134), seconds (184) et troisième (221) moyens de repérages sont constitués par des roues à picots coopérant avec des perforations réalisées sur la bande réceptrice (3).

14. Installation selon la revendication 11, caractérisée en ce que les moyens (230 à 260) de conditionnement des formats (3') de bande réceptrice comprennent des moyens (230, 240; 30, 40) d'alimentation et de superposition de feuilles transparentes de matière thermoplastique, des moyens (250) de soudage et de refroidissement et des moyens (260) de découpe de formats de bande (6') conditionnés.

15. Installation selon l'une quelconque des revendications 1 à 14, caractérisée en ce qu'elle comprend des moyens (212, 213) de découpe de la bande réceptrice (3) pour prélever des formats (3') dans la bande, correspondant chacun à une image transférée par le film négatif (2), un premier dispositif (30) d'alimentation en une bande inférieure (5) de matière thermoplastique, un second dispositif (40) d'alimentation en une bande supérieure (4) de matière thermoplastique, des moyens (20, 50) pour superposer en premier lieu avec la bande inférieure (5) de matière thermoplastique un format (3') à plastifier, des moyens (10) pour sceller localement un format (3') superposé avec ladite bande inférieure (5) thermoplastique, des moyens (101, 102) pour préchauffer chacune des deux bandes (5, 4) de matière thermoplastique de façon indépendante avant leur mise en superposition et le thermoscellage de l'ensemble complexe (6) constitué de la superposition des deux bandes thermoplastiques (4, 5) et du format (3'), des moyens de thermoscellage et de refroidissement, des moyens d'avancement pas à pas et des moyens (264) de découpe des formats plastifiés.

16. Installation selon la revendication 15, caractérisée en ce que les moyens (100) de mise en superposition de la bande thermoplastique supérieure (4) et de la bande thermoplastique inférieure (5') porteuse de formats (3') comprend un ensemble transporteur (100) constitué de deux bandes transporteuses (107, 108) disposées respectivement au-dessous et au-dessus du trajet de la bande thermoplastique inférieure (5') porteuse de formats (3'), et de rouleaux (103, 106) permettant l'application d'une pression sur le complexe (6).

17. Installation selon la revendication 15 ou la revendication 16, caractérisée en ce qu'elle comprend un outillage (251) de scellage de la surface du complexe (6) correspondant à un format (3') qui est situé en aval des moyens (101, 102) de préchauffage de chacune des deux bandes (5, 4) thermoplastiques, sur le trajet de l'ensemble transporteur (100).

18. Installation selon la revendication 17, caractérisée en ce qu'elle comprend des moyens de refroidissement (110) du complexe (6) disposés en aval de l'outillage (251) de scellage de la surface du complexe (6) sur le trajet de l'ensemble transporteur (100).

19. Installation selon la revendication 18, caractérisée en ce qu'elle comprend un outillage (252) de scellage de la périphérie du complexe (6) autour du format (3'), avec des outils inférieur (252a) et supérieur (252b) mobiles verticalement, en aval du trajet de l'ensemble transporteur (100).

20. Installation selon l'une quelconque des revendications 15 à 19, caractérisée en ce que les moyens (10) pour sceller localement un format (3') superposé à la bande thermoplastique inférieure (5) comprennent un outil chauffant (14) mobile verticalement, à l'intérieur d'une fente (15) ménagée dans une plaque (13) disposée sous le trajet de la bande thermoplastique inférieure (5) dans la zone de mise en superposition d'un format (3') avec la bande thermoplastique inférieure (5).

21. Installation selon l'une quelconque des revendications 15 à 20, caractérisée en ce que les moyens (20) de superposition d'un format à plastifier (3') avec la bande inférieure thermoplastique (5) sont combinés avec les moyens de découpe de la bande réceptrice (3) et comprennent un poinçon (12) déplaçable verticalement par rapport à une matrice (11) disposée entre la bande thermoplastique inférieure (5) et la bande (3) d'amenée des formats (3').

22. Installation selon l'une quelconque des revendications 15 à 20, caractérisée en ce que les formats (3') découpés dans la bande réceptrice (3) sont amenés individuellement sous une forme prédécoupée dans un magasin (61) et en ce que les moyens (50) de superposition d'un format à plastifier (3') avec la bande inférieure thermoplastique (5) comprennent un dispositif de préhension constitué par un mécanisme à tiges (51, 52) articulées autour d'axes de pivotement fixes (53, 54) et portant des moyens (58) de saisie d'un format (3') pour saisir un format (3') situé dans le magasin (61) et l'amener en superposition avec la bande thermoplastique inférieure (5).

23. Installation selon la revendication 16, caractérisée en ce que les moyens (101) de préchauffage coopérant avec la bande thermoplastique inférieure (5) sont situés entre la sortie des moyens (20, 50) de superposition d'un format (3) avec la bande thermoplastique inférieure (5) et l'ensemble transporteur (100) de mise en superposition de la bande thermoplastique supérieure (4) et de la bande thermoplastique inférieure (5') porteuse des formats (3').

24. Installation selon la revendication 16 ou la revendication 23, caractérisée en ce que les moyens de préchauffage (12) coopérant avec la bande thermoplastique supérieure (4) sont situés sous la partie de la bande transporteuse (108) disposée au-dessus du trajet de la bande thermoplastique inférieure (5') porteuse de formats (3'), qui sert de guidage à la bande thermoplastique supérieure (4) en amont des rouleaux (103) d'entrée du transporteur (100).

25. Procédé de saisie de données et de reproduction par transfert pour reporter en continu sur un support par diffusion-transfert à partir d'une image négative intermédiaire, des informations stockées de façon discontinue sur un support de base, selon lequel on impressionne un film négatif (2) en fonction des informations stockées sur le support de base (1) on superpose un film négatif impressionné (2) et une bande réceptrice (3), et on met avant leur superposition, le film négatif impressionné (2) et la bande réceptrice (3) en contact avec un bain unique de traitement assurant le développement du film négatif (2) puis, lors de la superposition du film négatif et de la bande réceptrice, on réalise le transfert, par diffusion d'une image positive, sur la bande réceptrice (3), de l'image développée sur le film négatif (2), caractérisé en ce que pour réaliser la superposition-transfert du film négatif impressionné et de la bande réceptrice, on met en coïncidence le film négatif impressionné (2) et la bande réceptrice (3) à l'entrée de la zone de superposition, on pince simultanément le film (2) et la bande (3) à l'endroit de leur mise en coïncidence pour entraîner ceux-ci de façon simultanée, et à la sortie de ladite zone de superposition, on pince et entraîne la seule bande réceptrice (3), le film (2) étant entraîné par adhérence sur la bande réceptrice et se séparant librement à la sortie de ladite zone de superposition, et en ce qu'on repère l'avancement de la bande réceptrice (3) pour commander par intermittence, à des instants déterminés par la détection de repères formés sur la bande réceptrice (3), l'impression sur le film négatif (2) d'un jeu d'informations stockées de façon discontinue sur le support de base (1).

26. Procédé selon la revendication 25, caractérisé en ce qu'en aval de la zone de superposition on découpe la bande réceptrice (3) en formats individuels (3') correspondant chacun à une image transférée par le film négatif (2), on introduit successivement pas à pas la série de formats (3') à plastifier en une bande thermoplastique inférieure (5) et une bande thermoplastique supérieure (4) en superposant à chaque fois en premier lieu avec la bande thermoplastique inférieure (5) le format (3') à plastifier, on scelle ensuite localement ledit format (3') sur la bande thermoplastique inférieure (5), on préchauffe de façon indépendante, d'une part la bande thermoplastique inférieure (5) sur laquelle ont été fixés localement des formats (3'), et d'autre part la bande thermoplastique supérieure (4) avant sa mise en superposition avec la bande thermoplastique inférieure (5); on réalise les opérations de thermoscellage et de refroidissement sur l'ensemble complexe (6) constitué de la superposition des deux bandes thermoplastiques préchauffées (4, 5) et du format (3') et on procède au découpage des formats plastifiés (6').

27. Procédé selon la revendication 26, caractérisé en ce que l'on maintient une pression sur le complexe (6) pendant une première opération de scellage de la surface du complexe (6) correspondant à un format (3') et une opération de refroidissement consécutive à ladite première opération de scellage de surface.

## Claims

1. An apparatus for data recording and reproduction by transfer, used for continuously transferring onto a support, by the photographic process of transfer by diffusion from an intermediate negative image data discontinuously stored on a base medium, and comprising a device (110) for forming a latent image on a negative film (2) according to data stored on the base medium (1), a device (140) for superimposing a receiving strip (3) on the exposed negative film (2), and means (150) for placing before their superimposition, the exposed negative film (2) and the receiving strip (3), in contact with a single treatment bath used for developing the negative film (2) and, when superimposing the negative film on the receiving strip, for transferring onto said strip (3) by diffusion a positive image from that developed on the negative film (2), characterized in that the device (140) for superimposing the exposed negative film and the receiving strip comprises a first pair of transport rollers (146) placed at the inlet of the zone (147) of superimposition of the printed negative film (2) and the receiving strip (3) for gripping and carrying simultaneously the superimposed strip (3) and film (2), and a second pair of transport rollers (145) placed at the outlet of said superimposition zone (147), for gripping and carrying the receiving strip (3) only, the film (2) itself being moved by adhering to the receiving strip and detaching itself at the outlet from the said superimposition zone (147), and first registering means (134) for sensing the advancing movement of the receiving strip (3) are provided for controlling intermittently, at time intervals determined by the detection of guidemarks formed on the receiving strip (3), the production on the negative film (2) of an image comprising a set of information stored discontinuously on the base medium (1).

2. The apparatus according to claim 1, characterized in that the second pair of transport rollers is placed above the zone of superimposition of the negative film (2) and the receiving strip (3), in order to keep said zone vertically straight by exerting a constant pulling action on the receiving strip (3).

3. The apparatus according to claim 1 or 2, characterized in that it further comprises means (150) for applying the treatment bath on the receiving strip (3) and on the film (2) inside a treatment tank (151) situated under the first pair of transport rollers (146) which simultaneously act as draining rollers.

4. The apparatus according to claim 3, characterized in that it further comprises means for recovering (153, 154, 155) and recycling (156, 157, 158, 159) the treatment bath, which means are situated under the transport path of the negative film (2) and receiving strip (3) inside the treatment tank (151).

5. The apparatus according to claim 2 or 3, characterized in that the receiving strip (3) and the film (2) are laterally introduced into the treatment tank (151) and have in said tank (151) paths that are symmetrical with respect to a vertical plane defined by the superimposition zone.

6. The apparatus according to claim 2, and any one of claims 3 to 5, characterized in that the receiving strip (3) and the film (2) are introduced into the first pair of transport rollers (146) at respective angles varying between about 15° and 60°, from the vertical.

7. The apparatus according to any one of claims 3 to 6, characterized in that the receiving strip (3) and the film (2) are introduced at the top of the treatment tank (151), each one forming a loop which is immersed into the treatment bath.

8. The apparatus according to any one of claims 1 to 7, characterized in that it further comprises means (180) for storing additional information from the base medium (1) during exposure of the negative film (2), and second registering means (184), synchronized with the first registering means (134) provided for sensing the forward movement of the receiving strip (3), said second registering means being situated downstream of the superimposition zone (147), for controlling the registered printing on the receiver strip (3) of the stored additional information.

9. The apparatus according to any one of claims 1 to 5, characterized in that it further comprises a light-proof external housing (101) and means for washing (173, 174), stabilizing (176) and drying (179) the receiving strip (3) being provided in the housing downstream of the transport rollers (145) placed at the outlet from the superimposition zone (147) and upstream of the means (186, 187), if any, for printing additional information.

10. The apparatus according to any one of claims 1 to 9, characterized in that the negative film (2) exposure means (110) comprise a lens (117) associated to a flash lamp (119) producing flashes at said predetermined intermittent moments.

11. The apparatus according to any one of claims 1 to 10, characterized in that it further comprises means for automatically moving the base medium (1) forward over a predetermined distance after each exposure of the film (2).

12. The apparatus according to any one of claims 1 to 11, adapted to be used in the production of identification or similar documents, characterized in that it further comprises additional means (211) for affixing security markings on the receiver strip (3), with third means for registering (221) the images formed on the strip (3), with means (212, 213) for cutting the receiving strip (3) with a view to taking a format (3') therefrom, each format corresponding to an image transferred by the negative film (2), and with means (230 to 260) for packing the cut-out formats (3').

13. The apparatus according to any one of claims 1 to 12, characterized in that said first (134), second (184) and third (221) registering means are constituted by sprocket wheels cooperating with perforations made in the receiving strip (3).

14. The apparatus according to claim 11, characterized in that the means (230 to 260) provided for packing the formats (3') from the receiving strip consist in means (230, 240; 30, 40) for supplying and superimposing transparent strips of thermoplastic material, sealing and cooling means (250) and means (260) for cutting formats (6') from the packed strip.

15. The apparatus according to claims 1 to 14, characterized in that it further comprises means (212, 213) for cutting formats (3') out of the receiving strip (3) each format corresponding to an image transferred from the negative film (2), first means (30) feeding a lower strip (5) of thermoplastic material, second means (40) feeding an upper strip (4) of thermoplastic material, means (20, 50) for first superimposing a format (3') to be plastic-laminated on the lower strip (5) of thermoplastic material, means (10) for partially sealing a format (3') superimposed on said lower strip (5) of the thermoplastic material, means (101, 102) for pre-heating each strip (5, 4) of thermoplastic material independently before superimposing them, and before heat-sealing the compound assembly (6) resulting from the superimposition of the two thermoplastic strips (4, 5) and the format (3'), heat-sealing and cooling means, means for stepwise moving and means (264) for cutting the plastic-laminated formats.

16. The apparatus according to claim 15, characterized in that the means (100) for superimposing the upper thermoplastic strip (4) on the format (3') carrying lower thermoplastic strip (5') comprise a conveying assembly (100) composed of two conveyor belts (107, 108) situated respectively under and above the transport path of the format (3')-carrying lower thermoplastic strip (5'), and of rollers (103, 106) permitting to apply a pressure on said compound assembly (6).

17. The apparatus according to claims 15 or 16, characterized in that it further comprises an equipment (251) for sealing the surface of the compound-assembly (6) corresponding to a format (3') which is situated downstream of the means (101, 102) used for pre-heating each one of the thermoplastic strips (5, 4) on the transport path of the conveying assembly (100).

18. The apparatus according to claim 17, characterized in that it further comprises means (110) for cooling the compound assembly (6) which means are situated downstream of the equipment (251) used for sealing the surface of the compound assembly (6) on the path followed by the conveying assembly (100).

19. The apparatus according to claim 18, characterized in that it further comprises means (252) for sealing the periphery of the compound assembly (6) around the format (3') consisting of lower (252a) and upper (252b) tools moving vertically, downstream of the path followed by the conveying assembly (100).

20. The apparatus according to any one of claims 15 to 19, characterized in that the means (10) for locally sealing a format (3') superimposed on the lower thermoplastic strip (5), comprise a heating tool (14) moving vertically inside a slot (15) provided in a plate (13) situated under the path followed by the lower thermoplastic strip (5) in the area where a format (3') is superimposed on a lower thermoplastic strip (5).

21. The apparatus according to any one of claims 15 to 20, characterized in that the means (20) used for superimposing a format (3') to be plastic-laminated on the lower thermoplastic strip (5), are combined with means for cutting the receiving strip (3) and comprise a punch (12) which is vertically movable with respect to a die (11) situated between the lower thermoplastic strip (5) and the belt (3) supplying the formats (3').

22. The apparatus according to any one of claims 15 to 20, characterized in that the formats (3') cut from the receiving strip (3) are brought individually in pre-cut form in a magazine (61) and in that the means (50) provided for superimposing a format (3') to be plastic-laminated on the lower thermoplastic strip (5) comprise a gripping device constituted by a mechanism with arms (51, 52) mounted for pivoting about fixed axes (53, 54) and carrying members (58) for gripping a format (3') stored inside the magazine (61) and bringing it in superimposition on the lower thermoplastic strip (5).

23. The apparatus according to claim 16, characterized in that pre-heating means (101) which cooperate with the lower thermoplastic strip (5) are situated between the outlet from the means (20, 50) used for superimposing a format (3) on the lower thermoplastic strip (5) and the conveyor assembly (100) used for superimposing the upper thermoplastic strip (4) on the format (3')-carrying lower thermoplastic strip (5').

24. The apparatus according to claim 16 or claim 23, characterized in that the pre-heating means (12) which cooperate with the upper thermoplastic strip (4) are situated under the part of the conveying belt (108) which is situated above the path followed by the format (3')-carrying thermoplastic strip (5') and which is used as a guide for the upper thermoplastic strip (4) upstream of the input rollers (103) of the conveyor (100).

25. A method for data recording and reproduction by transfer, designed to transfer continuously onto a support, by the diffusion-transfer method, from an intermediate negative image, information stored discontinuously on a base medium, consisting in forming a latent image on a negative film (2) in relation to the information stored on said base (1), superimposing on the exposed negative film (2) a receiving strip (3), the negative film (2) and the receiving strip (3) being placed, before being superimposed, in contact with the same treatment bath for developing the negative film (2), and when superimposing the film on the receiving strip transferring by diffusion of a positive image on to the receiving strip (3), the image developed on the negative film (2) to perform the superimposition-transfer of the negative exposed film and of the receiving strip, the negative film (2) and receiving strip (3) are placed coincidentally at the inlet to the superimposition zone, then the film (2) and the strip (3) are pinched simultaneously where they coincide, in order to be moved simultaneously, and at the outlet from the said superimposition zone, only the receiving strip (3) is pinched and moved, the film (2) being moved by adhering to the receiving strip and detaching itself easily at the outlet from said superimposition zone, and in that the forward movement of the receiving strip (3) is registered in order to control intermittently, at time intervals determined by the detection of markings made in the receiving strip (3), the printing on the negative film (2) of a set of information stored discontinuously on the base medium (1).

26. The method according to claim 25, characterized in that it further comprises the following steps: cutting into individual formats (3') the receiving strip (3), downstream on the superimposition zone, each format corresponding to an image transferred by the negative film (2) and introducing the series of formats (3') to be plastic-laminated stepwise successively between a lower thermoplastic strip (5) and an upper thermoplastic strip (4), wherein the next format (3') to be plastic-laminated is first superimposed on the lower thermoplastic strip (5), after what the said format (3') is partly sealed on said lower thermoplastic strip (5), on the one hand the lower thermoplastic strip (5) on which the formats (3') have been locally fixed, and on the other hand the upper thermoplastic strip (4), prior to the superimposition of the latter on the lower thermoplastic strip (5), are independently pre-heated, the compound assembly (6) resulting from the superimposition of the two pre-heated thermoplastic strips (4, 5) and the format (3') is heat-sealed and cooled, and the plastic-laminated formats (6') are cut.

27. The method according to claim 26, characterized in that a pressure is applied on the compound assembly (6) throughout a first sealing operation of the compound assembly (6) surface corresponding to a format (3') and a cooling operation consecutive to said first surface sealing operation.

**Patentansprüche**

1. Vorrichtung zur Datenerfassung und Wiedergabe durch Übertragung zwecks kontinuierlicher Aufzeichnung auf einem Träger mittels des fotografischen Übertragungsverfahrens durch Diffusion, ausgehend von einem negativen Zwischenbild, von diskontinuierlich auf einem Basisträger gespeicherten Informationen, mit einer Einrichtung (110) zum Belichten eines Negativfilms (2) als Funktion von auf dem Basisträger (1) gespeicherten Informationen, einer Einrichtung (140) zum Überlagern eines Empfangsbandes (3) über den belichteten Negativfilm und Mitteln (150) zum Inkontaktbringen des belichteten Negativfilms (2) und des Empfangsbandes (3) mit einem einzigen Behandlungsbad zwecks Entwickelns des Negativfilms (2) vor deren Überlagerung und dann, während des Überlagerns des Negativfilms und des Empfangsbandes, Übertragens des auf dem Negativfilm (2) entwickelten Bildes durch Diffusion eines Positivbildes auf das Empfangsband (3), dadurch gekennzeichnet, dass die Überlagerungs-Übertragungseinrichtung (140) des belichteten Negativfilms und des Empfangsbandes ein erstes Paar Zugrollen (146) am Eingang der Zone (147) der Überlagerung des belichteten Negativfilms (2) und des Empfangsbandes (3) zum gleichzeitigen Einklemmen und Mitnehmen des überlagerten Films (2) und Bandes (3) und ein zweites Paar Zugrollen (145) am Ausgang der Überlagerungszone (147) zum Einklemmen und Mitnehmen nur des Empfangsbandes (3) umfasst, wobei der Film (2) durch Haften am Empfangsband mitgenommen wird und sich am Ausgang der Überlagerungszone (147) ungehindert trennt, und dass erste Mittel (134) zum Orten des Vorschubs des Empfangsbandes (3) zwecks Steuerns des Belichtens eines Satzes von diskontinuierlich auf den Basisträger (1) gespeicherten Informationen auf den Negativfilm (2) mit Unterbrechungen zu bestimmten Intervallen durch die Ermittlung von auf dem Empfangsband (3) gebildeten Markierungspunkten.

2. Vorrichtung nach Anspruch 1, dadurch gekennzeichnet, dass das zweite Paar Zugrollen über der Überlagerungszone des Negativfilms (2) und des Empfangsbandes (3) angeordnet ist, um die Überlagerungszone unter Gewährleistung eines konstanten Zugs auf das Empfangsband (3) geradlining vertikal zu halten.

3. Vorrichtung nach Anspruch 1 oder 2, dadurch gekennzeichnet, dass sie Mittel (150) zum Aufbringen des Behandlungsbades auf das Empfangsband (3) und den Film (2) in einem Behandlungsbottich (151) umfasst, welcher unter dem ersten Paar Zugrollen (146), die gleichzeitig die Funktion von Entwässerungsrollen ausüben, angeordnet ist.

4. Vorrichtung nach Anspruch 3, dadurch gekennzeichnet, dass sie Mittel (153, 154, 155) zur Rückgewinnung und Rückführung (156, 157, 158, 159) des Behandlungsbades umfasst, welche unter der Zirkulationsbahn des Negativfilms (2) und des Empfangbandes (3) im Behandlungsbottich (151) angeordnet ist.

5. Vorrichtung nach Anspruch 2 und Anspruch 3 oder 4, dadurch gekennzeichnet, dass das Empfangsband (3) und der Film (2) seitlich in den Behandlungsbottich (151) eingebracht werden und im Inneren dieses Bottichs (151) zu einer von der Überlagerungszone definierten vertikalen Ebene symmetrische Bahnen aufweisen.

6. Vorrichtung nach Anspruch 2 und einem der Ansprüche 3 bis 5, dadurch gekennzeichnet, dass das Empfangsband (3) und der Film (2) unter Einschliessen eines Winkels zwischen etwa 15° und 60° gegenüber der Vertikalen in das erste Paar Zugrollen (146) eingeführt werden.

7. Vorrichtung nach einem der Ansprüche 3 bis 6, dadurch gekennzeichnet, dass das Empfangsband (3) und der Film (2) im oberen Teil des Behandlungsbottichs (151) eingebracht werden und jeweils eine in das Behandlungsbad eintauchende Schleife bilden.

8. Vorrichtung nach einem der Ansprüche 1 bis 7, dadurch gekennzeichnet, dass sie weiters Speichermittel (180) für zusätzliche Informationen, ausgehend vom Basisträger (1), zwecks Einspeicherns zusätzlicher Informationen beim Belichten des Negativfilms (2) und zweite, mit den ersten Mittel (134) zum Orten des Vorschubs des Empfangsbandes (3) synchrongeschaltete Ortungsmittel (184) umfasst, welche stromabwärts von der Überlagerungszone (147) zum Steuern des Belichtens bei Ortung zusätzlicher eingespeicherter Informationen auf dem Empfangsband (3) angeordnet sind.

9. Vorrichtung nach einem der Ansprüche 1 bis 5, dadurch gekennzeichnet, dass sie ein lichtundurchlässiges Aussengehäuse (101) umfasst und dass Mittel zum Waschen (173, 174), zum Stabilisieren (176) und zum Trocknen (179) des Empfangsbandes (3) im Gehäuse stromabwärts von den am Ausgang der Überlagerungszone (147) angeordneten Zugrollen (145) und stromaufwärts von den gegebenenfalls vorhandenen Mitteln (186, 187) zum Belichten zusätzlicher Informationen vorgesehen sind.

10. Vorrichtung nach einem der Ansprüche 1 bis 9, dadurch gekennzeichnet, dass die Mittel (110) zum Belichten des Negativfilms (2) ein Objektiv (117) umfassen, das mit einer Blitzlampe (119) zur Erzeugung von Blitzlicht zu den vorbestimmten unterbrechenden Intervallen verbunden ist.

11. Vorrichtung nach einem der Ansprüche 1 bis 10, dadurch gekennzeichnet, dass sie Mittel zum automatischen Vorschub des Basisträgers (1) um einen vorbestimmten Schritt nach jeder Belichtung des Films (2) umfasst.

12. Vorrichtung nach einem der Ansprüche 1 bis 11 zur Anwendung bei der Herstellung identischer oder ähnlicher Stücke, dadurch gekennzeichnet, dass sie Zusatzmittel (211) zum Anbringen von Sicherheitsmarken auf dem Empfangsband (3), dritte Ortungsmittel (221) für auf dem Band (3) gebildete Bilder, Mittel (212, 213) zum Zuschneiden des Empfangsbandes (3) zur Erstellung eines Formats (3') im Band, das jeweils einem vom Negativfilm (2) übertragenen Bild entspricht, und Mittel (230 bis 260) zum Konditionieren der zugeschnittenen Formate (3') umfasst.

13. Vorrichtung nach einem der Ansprüche 1 bis 12, dadurch gekennzeichnet, dass erste (134), zweite (184) und dritte (221) Ortungsmittel durch mit am Empfangsband (3) vorgesehenen Perforationen zusammenwirkende Zahnräder gebildet sind.

14. Vorrichtung nach Anspruch 11, dadurch gekennzeichnet, dass die Mittel (230 bis 260) zum Konditionieren der Formate (3′) des Empfangsbandes Mittel (230, 240; 30, 40) zum Zuführen und Überlagern von Transparentfolien aus thermoplastischem Material, Mittel (250) zum Schweissen und Abkühlen und Mittel (260) zum Zuschneiden von konditionierten Bandformaten (6′) umfassen.

15. Vorrichtung nach einem der Ansprüche 1 bis 14, dadurch gekennzeichnet, dass sie Mittel (212, 213) zum Zuschneiden des Empfangsbandes (3) zur Erstellung von Formaten (3′) im Band, die jeweils einem vom Negativfilm (2) übertragenen Bild entsprechen, eine erste Einrichtung (30) zum Speisen mit einem unteren Band (5) aus thermoplastischem Material, eine zweite Einrichtung (40) zum Speisen mit einem oberen Band (4) aus thermoplastischem Material, Mittel (20, 50) zum Überlagern eines zu plastifizierenden Formats (3′) an erster Stelle mit dem unteren Band (5) aus thermoplastischen Material, Mittel (10) zum örtlichen Versiegeln eines mit dem unteren thermoplastischen Band (5) überlagerten Formats (3′), Mittel (101, 102) zum Vorerhitzen jedes der beiden Bänder (5, 4) aus thermoplastischem Material unabhängig voneinander vor ihrer Überlagerung und der Heisssiegelung des ganzen, aus der Überlagerung der beiden thermoplastischen Bändern (4, 5) und des Formats (3) bestehenden Komplexes (6), Mittel zum Heissversiegeln und zum Abkühlen, Mittel zum schrittweisen Vorschub und Mittel (264) zum Zuschneiden der plastifizierten Formate umfasst.

16. Vorrichtung nach Anspruch 15, dadurch gekennzeichnet, dass die Mittel (100) zum Überlagern des oberen thermoplastischen Bandes (4) und des Formats (3′) tragenden unteren thermoplastischen Bandes (5′) eine Transportgruppe (100), bestehend aus zwei unter bzw. über der Bahn des Formats (3′) tragenden unteren thermoplastischen Bandes (5′) angeordneten Transportbändern (107, 108) und Rollen (103, 106) zum Aufbringen eines Drucks auf den Komplex (6), umfassen.

17. Vorrichtung nach Anspruch 15 oder 16, dadurch gekennzeichnet, dass sie ein Gerät (251) zum Versiegeln der Oberfläche des Komplexes (6) entsprechend einem Format (3′) umfasst, welches stromabwärts von den Mitteln (101, 102) zum Vorerhitzen jedes der beiden thermoplastischen Bänder (5, 4) an der Bahn der Transportgruppe (100) angeordnet ist.

18. Vorrichtung nach Anspruch 17, dadurch gekennzeichnet, dass sie Mittel zum Abkühlen (110) des Komplexes (6) umfasst, die stromabwärts des Geräts (251) zum Versiegeln der Oberfläche des Komplexes (6) an der Bahn der Transportgruppe (100) angeordnet sind.

19. Vorrichtung nach Anspruch 18, dadurch gekennzeichnet, dass sie ein Gerät (252) zum Versiegeln des Umfanges des Komplexes (6) um das Format (3′) mit vertikal beweglichen unteren (252a) und oberen (252b) Instrumenten stromabwärts von der Bahn der Transportgruppe (100) umfasst.

20. Vorrichtung nach einem der Ansprüche 15 bis 19, dadurch gekennzeichnet, dass die Mittel (10) zum örtlichen Versiegeln eines auf dem unteren thermoplastischen Band (5) liegenden Formats (3′) ein vertikal bewegliches Heizgerät (14) in einem in einer Platte (13) vorgesehenen Schlitz (15) umfassen, welche Platte unter der Bahn des unteren thermoplastischen Bandes (5) in der Zone der Überlagerung eines Formats (3′) mit dem unteren thermoplastischen Band (5) liegt.

21. Vorrichtung nach einem der Ansprüche 15 bis 20, dadurch gekennzeichnet, dass die Mittel (20) zum Überlagern eines zu plastifizierenden Formats (3′) mit dem unteren thermoplastischen Band (5) mit den Mitteln zum Zuschneiden des Empfangsbandes (3) kombiniert sind und einen Stanzstempel (12) umfassen, der gegenüber einer zwischen dem unteren thermoplastischen Band (5) und dem Band (3) zur Zuführung von Formaten (3′) angeordneten Matrix (11) vertikal verschiebbar ist.

22. Vorrichtung nach einem der Ansprüche 15 bis 20, dadurch gekennzeichnet, dass die im Empfangsband (3) zugeschnittenen Formate (3′) einzeln in einer in einem Magazin (61) zuvor zugeschnittenen Form zugeführt werden, und dass die Mittel (50) zum Überlagern eines zu plastifizierenden Formats (3p) mit dem unteren thermoplastischen Band (5) eine Greifeinrichtung umfassen, bestehend aus einem um fixe Schwenkachsen (53, 54) angelenkten Stangenmechanismus (51, 52), der Mittel (58) zum Erfassen eines im Magazin (61) befindlichen Formats (3′) und zum Überlagern desselben auf das untere thermoplastische Band (5) tragen.

23. Vorrichtung nach Anspruch 16, dadurch gekennzeichnet, dass die Mittel (101) zum Vorerhitzen, die mit dem unteren thermoplastischen Band (5) zusammenwirken, zwischen dem Ausgang der Mittel (20, 50) zum Überlagern eines Formats (3′) mit dem unteren thermoplastischen Band (5) und der Transportgruppe (100) zum Überlagern des oberen thermoplastischen Bandes (4) und des Formate (3′) tragenden unteren thermoplastischen Bandes (5′) angeordnet sind.

24. Vorrichtung nach Anspruch 16 oder 23, dadurch gekennzeichnet, dass die Mittel zum Vorerhitzen (12), die mit dem oberen thermoplastischen Band (4) zusammenwirken, unter dem Teil des Transportbandes (108) angeordnet sind, welches sich über der Bahn des Formate (3′) tragenden unteren thermoplastischen Bandes (5′) befindet und als Führung für das obere thermoplastische Band (4) stromaufwärts der Rollen (103) am Eingang der Transportgruppe (100) dient.

25. Verfahren zur Datenerfassung und Wiedergabe durch Übertragung zwecks kontinuierlicher Aufzeichnung auf einem Träger mittels Diffusion-Übertragung von einem negativen Zwischenbild von diskontinuierlich auf einem Basisträger gespeicherten Informationen, bei welchem man einen Negativfilm (2) als Funktion von auf dem Basisträger (1) gespeicherten Informationen belichtet, einen belichteten Negativfilm (2) und ein Empfangsband (3) überlagert und man vor ihrer Überlagerung den belichteten Negativfilm (2) und das Empfangsband (3) in Kontakt mit einem einzigen Behandlungsbad zwecks Entwickelns des Negativfilms (2) bringt und man dann, während des Überlagerns von Negativfilm und Empfangsband, die Übertragung des auf dem Negativfilm (2) entwickelten Bildes auf das Empfangsband (3) durch Diffusion eines Positivbildes vornimmt, dadurch gekennzeichnet, dass man zur Realisierung der Überlagerung-Übertragung des belichteten Negativfilms und des Empfangsbandes den belichteten Negativfilm (2) und das Empfangsband (3) am Eingang der Überlagerungszone in Deckung bringt, den Film (2) und das Band (3) an der Stelle, wo sie zur Überdeckung kommen, gleichzeitig einklemmt, um sie gleichzeitig mitzunehmen, und am Ausgang der Überlagerungszone nur das Empfangsband (3) einklemmt und mitnimmt, wobei der Film (2) durch Haften auf dem Empfangsband mitgenommen wird und sich am Ausgang der Überlagerungszone ungehindert trennt, und dass man den Vorschub des Empfangsbandes (3) ortet, um die Belichtung eines Satzes von diskontinuierlich auf dem Basisträger (1) gespeicherten Informationen auf den Negativfilm (2) mit Unterbrechungen zu bestimmten Intervallen durch die Ermittlung von auf dem Empfangsband (3) gebildeten Markierungspunkten zu steuern.

26. Verfahren nach Anspruch 25, dadurch gekennzeichnet, dass man stromabwärts von der Überlagerungszone das Empfangsband (3) in einzelne Formate (3') zuschneidet, die jeweils einem vom Negativfilm (2) übertragenen Bild entsprechen, man nacheinander die Reihe von zu plastifizierenden Formaten (3') schrittweise auf ein unteres thermoplastisches Band (5) und ein oberes thermoplastisches Band (4) bringt, indem man jedesmal das zu plastifizierende Format (3') an erster Stelle mit dem unteren thermoplastischen Band (5) überlagert, man das Format (3') danach auf dem unteren thermoplastischen Band (5) örtlich versiegelt, unabhängig voneinander einerseits das untere thermoplastische Band (5), auf dem örtlich Formate (3') fixiert wurden, und anderseits das obere thermoplastische Band (4) vor dessen Überlagerung mit dem unteren thermoplastischen Band (5) vorerhitzt, man einen Heissversiegelungs- und Abkühlvorgang an dem ganzen, aus der Überlagerung der beiden vorerhitzten thermoplastischen Bänder (4, 5) und des Formats (3') gebildeten Komplex (6) vornimmt und zum Zuschneiden der plastifizierten Formate (6') schreitet.

27. Verfahren nach Anspruch 26, dadurch gekennzeichnet, dass man während eines ersten Versiegelungsvorganges der Oberfläche des Komplexes (6) entsprechend einem Format (3') und eines an den ersten Oberflächenversiegelungsvorgang anschliessenden Abkühlungsvorgangs einen Druck auf den Komplex (6) ausübt.

Fig.1

Fig.2b

16

1'
111a

1''

113
1'''
115
114

1''''
112
111b

102

Fig.2a

121

122

124

128

123

125

116

111
113
112
114
1
1a

115

102

Fig.2

121

2
122

127
127
124
127
123
126
125
127
118
117
119
116
112
181
114
1
115

102

0 097 598

Fig.3

Fig.4

# Fig.5

Fig. 6

Fig-7

0 097 598

Fig. 8

Papier

Fig. 9

33

Fig. 10

Fig. 11